# EUROPEAN PATENT APPLICATION

(11) **EP 4 636 763 A1**
(43) Date of publication of application: **22.10.2025**
(21) Application number: 24764090.7
(22) Date of filing: 24.01.2024
(51) Int. Cl.: G10L 21/055, G10L 15/26, G10L 21/06, G10L 15/00, H04R 3/00

(54) **ELECTRONIC DEVICE FOR RECEIVING AUDIO AND OPERATION METHOD THEREFOR**

(30) Priority: 27.02.2023 KR 20230026350; 31.03.2023 KR 20230042945
(71) Applicant: Samsung Electronics Co., Ltd., Suwon-si, Gyeonggi-do 16677 (KR)
(72) Inventor: RYU, Chunwoo, Suwon-si Gyeonggi-do 16677 (KR); CHEONG, Gupil, Suwon-si Gyeonggi-do 16677 (KR); KANG, Doosuk, Suwon-si Gyeonggi-do 16677 (KR)
(74) Representative: Appleyard Lees IP LLP
(86) International application number: PCT/KR2024/001143
(87) International publication number: WO 2024/181690

(57) **Abstract**

Disclosed is an electronic device comprising: a memory for storing commands; a communication module; and a processor. The commands enable the electronic device to: establish a communication link with an external electronic device; receive advertising data from a source electronic device; transmit, to the external electronic device, via the communication link, synchronization information related to first data acquired from the advertising data; acquire second data that is in a different language or is a non-auditory type and corresponds to the first data; and output the second data at a point in time synchronized with a point in time at which the external electronic device outputs the first data.

## Description

### [Technical Field]

Various embodiments of the disclosure relate to electronic devices receiving audio and methods for operating the same.

### [Background Art]

Bluetooth communication technology may suggest a short-range wireless communication technology that enables electronic devices to be connected to each other for exchanging data or information. Bluetooth communication technology may have Bluetooth legacy (or classic) communication technology or Bluetooth low energy (BLE) communication technology and have various kinds of topology, such as piconet or scattemet.

Recently in wide use are electronic devices adopting Bluetooth communication technology. For example, a pair of earbuds that may be respectively worn on both ears of the user are widely used as an ear-wearable device. An ear-wearable device may provide various functions. For example, an ear-wearable device may include a microphone to identify the user's voice, thereby transmitting data for the user's voice to an electronic device (e.g., a smartphone). Further, the ear-wearable device may include a speaker to output the audio data received from an electronic device (e.g., a smartphone) to through the speaker.

The ear-wearable device may include a primary earbud (e.g., the right earbud) and a secondary earbud (e.g., the left earbud) that may be connected to an electronic device (e.g., a smart phone). The primary earbud may transmit voice data to the electronic device through connection with the electronic device, and the electronic device may transmit audio data (or audio content) to the primary earbud. The primary earbud may transfer audio data (or audio content) received from the electronic device through wireless communication to the secondary earbud and may output the audio data through the speaker. The secondary earbud may be synchronized with the primary earbud, outputting the audio data transferred from the primary earbud or electronic device through the speaker.

The primary earbud and the secondary earbud (hereinafter referred to as 'earbuds') may be connected to the electronic device based on Bluetooth communication to perform the above operations. To that end, the earbuds may perform pairing including an inquiry and/or an inquiry scan, or a BLE advertising and/or BLE scan.

The BLE advertising may mean an operation for periodically broadcasting an advertising packet through an advertising physical channel, and the BLE scan may mean an operation for monitoring reception of the advertising packet.

### [Detailed Description of the Invention]

### [Technical Solution]

An electronic device and an operation method thereof according to embodiments of the disclosure may receive audio data broadcast from a source electronic device.

In an electronic device and a method for operating the same according to embodiments of the disclosure, the electronic device may receive audio data and output other audio data corresponding to the audio data or non-auditory data.

An electronic device according to an embodiment may comprise memory storing instructions, a communication module, a processor functionally connected to the memory and the communication module. The instructions may, when executed by the processor, cause the electronic device to establish a communication link with an external electronic device through the communication module. The instructions may, when executed by the processor, cause the electronic device to receive advertising data from a source electronic device through the communication module. The instructions may, when executed by the processor, cause the electronic device to transmit synchronization information related to first data obtained from the advertising data to the external electronic device through the communication link. The instructions may, when executed by the processor, cause the electronic device to obtain second data corresponding to the first data. The instructions may, when executed by the processor, cause the electronic device to output the second data at a time synchronized with a time when the external electronic device outputs the first data.

A method for operating an electronic device according to an embodiment may comprise establishing a communication link with an external electronic device. The method may comprise receiving advertising data from a source electronic device. The method may comprise transmitting synchronization information related to first data obtained from the advertising data to the external electronic device through the communication link. The method may comprise obtaining second data corresponding to the first data. The method may comprise outputting the second data at a time synchronized with a time when the external electronic device outputs the first data.

According to an embodiment, in a non-transitory computer-readable storage medium storing one or more programs, the one or more programs may include instructions to, when executed by at least one processor of an electronic device, enable the electronic device to establish a communication link with an external electronic device, receive advertising data from a source electronic device, transmit synchronization information related to first data obtained from the advertising data to the external electronic device through the communication link, obtain second data corresponding to the first data, and output the second data at a time synchronized with a time when the external electronic device outputs the first data.

### [Brief Description of Drawings]

FIG. 1 is a view illustrating an electronic device in a network environment according to an embodiment;
FIG. 2 is a view illustrating connection between electronic devices based on short-range wireless communication according to an embodiment;
FIG. 3 is a view illustrating a configuration of an electronic device supporting short-range wireless communication according to an embodiment;
FIG. 4 is a signal flowchart illustrating a procedure for synchronizing with a broadcast isochronous group (BIG), according to an embodiment;
FIG. 5 is a view illustrating a format of BIG information according to an embodiment;
FIG. 6 is a view illustrating a BIG event for a periodic advertising event according to an embodiment;
FIG. 7 is a view illustrating a BIG and BIS events according to an embodiment;
FIGS. 8A, 8B, and 8C are views illustrating retransmission of BIS data packets according to an embodiment;
FIG. 9 is a view illustrating a system structure for transmitting audio data according to an embodiment of the disclosure;
FIG. 10 is a view illustrating an example of a BIS service according to an embodiment;
FIG. 11 is a view illustrating an operation of outputting audio of another language synchronized with BIS audio, according to an embodiment;
FIG. 12 is a view illustrating operations of a source electronic device according to an embodiment;
FIGS. 13 and 14 are views illustrating operations of an electronic device providing a non-auditory service synchronized with an audio service of an external electronic device according to embodiments;
FIG. 15 is a view illustrating operations of an external electronic device receiving an audio service, according to an embodiment;
FIG. 16 is a view illustrating periodic advertising for a BIS audio service according to an embodiment;
FIG. 17 is a view illustrating transmission of BIS audio data according to an embodiment;
FIG. 18 is a view illustrating an operation of transmitting a plurality of BIS audio streams including the same content, according to an embodiment;
FIG. 19 is a view illustrating a user interface (UI) for selecting a plurality of audio services according to an embodiment;
FIGS. 20A and 20B are views illustrating a user interface for selecting an output means of a BIS audio service according to embodiments;
FIG. 21 is a view illustrating an operation of outputting vibration data corresponding to an audio service, according to an embodiment;
FIG. 22 is a view illustrating an operation of outputting text data corresponding to an audio service, according to an embodiment; and
FIG. 23 is a view illustrating an operation of outputting text data corresponding to at least one of a plurality of audio services according to an embodiment.

### [Mode for Carrying out the Invention]

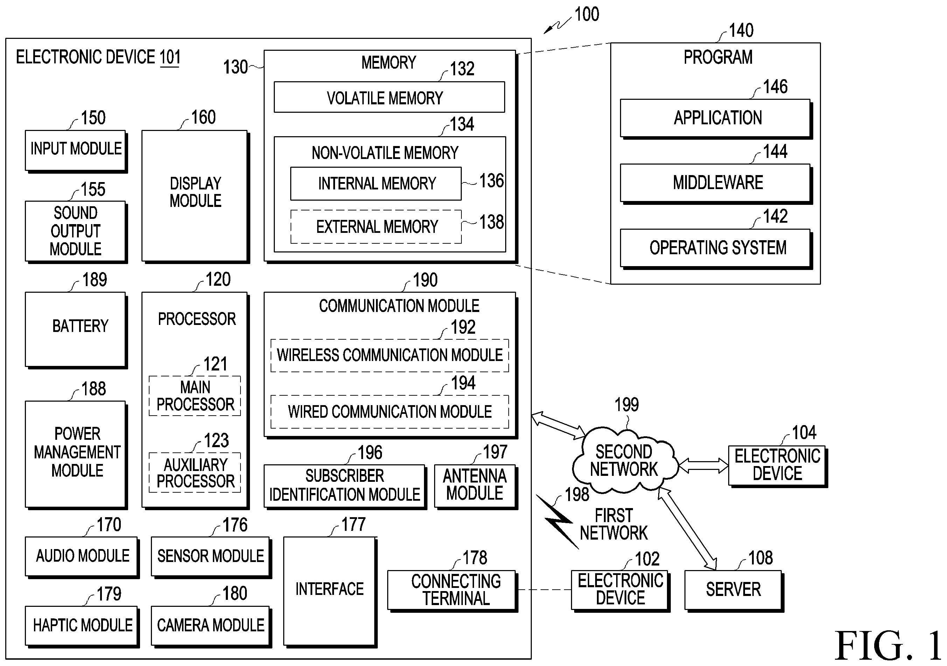

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

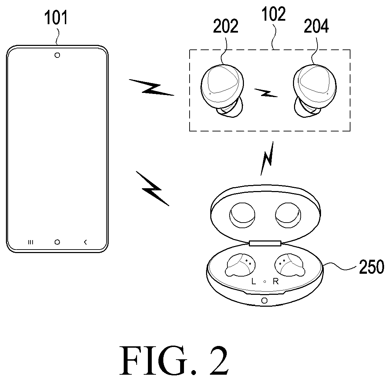

FIG. 2 is a view illustrating connection between electronic devices based on short-range wireless communication according to an embodiment.

Referring to FIG. 2, an external electronic device 102 (e.g., an ear-wearable device) may be wirelessly connected to an electronic device (e.g., the electronic device 101). In an embodiment, the electronic device 101 may be a smartphone, tablet, or laptop computer. In an embodiment, the external electronic device 102 is a binaural ear-wearable device and may include at least one of a first electronic device 202 (e.g., a left earbud) and a second electronic device 204 (e.g., a right earbud).

In an embodiment, the first electronic device 202 and the second electronic device 204 are shown as a pair of earbuds, but the first electronic device 202 and the second electronic device 204 may include not only earbuds but also devices capable of operating in pair. According to an embodiment, the first electronic device 202 and the second electronic device 204 may be implemented to include the same or similar components to each other.

According to an embodiment, the electronic device 101 may establish a connection (e.g., a communication link) with at least one of the first electronic device 202 or the second electronic device 204 and transmit and/or receive data to/from each other. For example, the electronic device 101 may establish a communication link with at least one of the first electronic device 202 and the second electronic device 204 based on short-range wireless communication technology, such as at least one of a Wi-Fi scheme or Bluetooth scheme (e.g., Bluetooth classic or Bluetooth low energy (BLE)), or ultra-wideband (UWB) scheme. However, the scheme in which the electronic device 101 establishes a communication link with the first electronic device 202 and the second electronic device 204 is not limited to at least one of the Wi-Fi scheme, Bluetooth scheme, or UWB scheme.

In an embodiment, the electronic device 101 may establish a communication link with only one of the first electronic device 202 or the second electronic device 204 or establish an individual communication link with each of the first electronic device 202 and the second electronic device 204.

In an embodiment, the electronic device 101 may play a role as central (or master, primary device, or main), and the external electronic device 102 (e.g., at least one of the first electronic device 202 or the second electronic device 204) may play a role as peripheral (or slave or secondary). The electronic device 101 operating as a central may transmit data to the external electronic device 102 (e.g., the first electronic device 202 or the second electronic device 204) operating as a peripheral. For example, when the electronic device 101 and the first electronic device 202 establish a communication link with each other, the electronic device 101 may be selected as central, and the first electronic device 202 may be selected as peripheral. In an audio service, the electronic device 101 operating as central may be a source electronic device, and the electronic device (e.g., the first electronic device 202 or the second electronic device 204) operating as peripheral may be a sink electronic device.

In an embodiment, the first electronic device 202 and the second electronic device 204 may establish a communication link between each other based on at least one of a Wi-Fi scheme, a Bluetooth scheme, or a UWB scheme, but the method in which the first electronic device 202 and the second electronic device 204 establish a communication link is not limited to at least one of the Wi-Fi scheme, the Bluetooth scheme, or the UWB scheme.

In an embodiment, one of the first electronic device 202 and the second electronic device 204 may operate as a central (or primary device), and the other may operate as a peripheral (or secondary device). The electronic device (e.g., the first electronic device 202) operating as central may transmit data (e.g., reception acknowledgment signal or relay data) to the electronic device (e.g., the second electronic device 204) operating as peripheral. For example, when the first electronic device 202 and the second electronic device 204 establish a communication link with each other, any one of the first electronic device 202 and the second electronic device 204 may be randomly selected as central, and the other may be selected as peripheral.

The first electronic device 202, and/or the second electronic device 204 may communicate directly or indirectly with the external electronic device 250. In an embodiment, the external electronic device 250 may be an ear buds case device or cradle device for storing and charging the first electronic device 202 and the second electronic device 204.

According to an embodiment, the external electronic device 250 may establish a connection (e.g., a communication link) with at least one of the electronic device 101, the first electronic device 202 or the second electronic device 204 and transmit and/or receive data to/from each other. For example, the external electronic device 250 may establish a communication link with at least one of the electronic device 101, the first electronic device 202, or the second electronic device 204 based on a Wi-Fi scheme, a Bluetooth scheme (e.g., Bluetooth classic or Bluetooth low energy (BLE)) or UWB scheme, but the scheme in which the external electronic device 250 establishes a communication link with the electronic device 101, the first electronic device 202, or the second electronic device 204 is not limited to at least one of the Wi-Fi scheme, the Bluetooth scheme, or the UWB scheme.

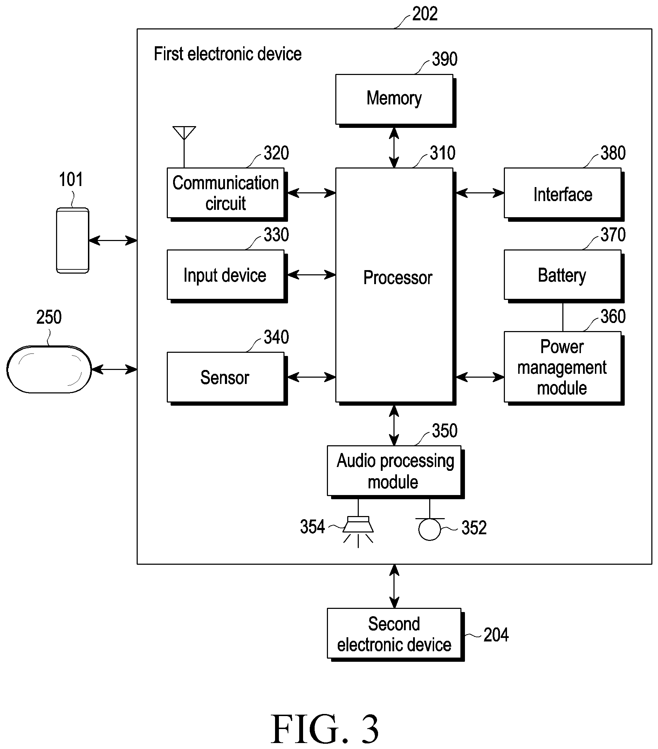

FIG. 3 is a view illustrating a configuration of an external electronic device supporting short-range wireless communication according to an embodiment.

Referring to FIG. 3, the electronic device 101 may be wirelessly connected to the electronic devices 202 and 204. The electronic device 101 may be implemented as, e.g., a smart phone but, without limited to those described and/or shown, may be implemented as various types of devices (e.g., notebook computers including standard laptop computers, ultrabooks, or tab books, laptop computers, tablet computers, or desktop computers). The electronic device 101 may be implemented as shown in FIG. 1 and may thus include at least some of the components (e.g., various modules) shown in FIG. 1, and no duplicate description thereof is thus given below.

The electronic devices 202 and 204 may be implemented as wireless earbuds but, without limited to those described and/or shown, may be implemented as various types of devices (e.g., a smart watch, a head-mounted display device, or devices for measuring biometric signals (e.g., heartrate patch)) that supports an audio service as described below. According to an embodiment, when the electronic devices 202 and 204 are wireless earbuds, the first electronic device 202 and the second electronic device 204 may be a pair of devices (e.g., a left earbud and a right earbud). According to an embodiment, the first electronic device 202 and the second electronic device 204 may be implemented to include the same or similar components.

According to an embodiment, the electronic device 101 may establish a communication connection with at least one of the electronic devices 202 and 204 and transmit and/or receive data to/from each other. For example, each of the electronic devices 202 and 204 may use device-to-device (D2D) communication, such as Wi-Fi direct or Bluetooth, (e.g., using a communication circuit (e.g., the communication circuit 320) supporting the corresponding communication scheme) to establish a communication connection with the electronic device 101 but, without limited thereto, may communicate with each other using other various types of communication (e.g., a communication scheme such as Wi-Fi using access points (APs), a cellular communication scheme using base stations, or a wired communication scheme).

In an embodiment, one of the first electronic device 202 and the second electronic device 204 may be a primary device (or a master device or a main device), and the other device may be a secondary device (or a slave device or a sub device). The primary device (or the main device) may transmit data to the secondary device. For example, when the first electronic device 202 and the second electronic device 204 establish a communication connection with each other, any one of the first electronic device 202 and the second electronic device 204 may be randomly selected as the primary device, and the other may be selected as the secondary device. In an embodiment, when the first electronic device 202 and the second electronic device 204 establish a communication connection therebetween, the device detected as first worn (e.g., when a value indicating wearing is detected by a wearing detection sensor (e.g., a proximity sensor, a touch sensor, a slope 6-axis sensor, or a 9-axis sensor)) may be selected as the primary device, and the other as the secondary device.

In an embodiment, the primary device may transmit data received from the electronic device 101 to the secondary device. For example, the first electronic device 202, which is the primary device, may not only output audio to the speaker 354 based on audio data received from the electronic device 101, but also output the audio data to the second electronic device which is the secondary device. In an embodiment, the second electronic device 204 which is the peripheral device may receive, through sniffing, the audio data, transmitted from the electronic device 101 to the central device (e.g., the first electronic device 202), based on the connection information provided from the central device (e.g., the first electronic device 202).

In an embodiment, the first electronic device 202 which is the central device may transmit the data (e.g., audio data or control data) received from the second electronic device 204 which is the peripheral device to the electronic device 101. For example, when a touch event occurs in the second electronic device 204 which is the secondary device, control data including information about the event may be transmitted to the electronic device 101 by the first electronic device 202 which is the primary device. However, without limited to those described, the secondary device (e.g., the second electronic device 204) and the electronic device 101 may establish a communication connection therebetween as described above, so that the secondary device and the electronic device 101 may directly perform transmission and/or reception of data therebetween.

In an embodiment, the first electronic device 202 may include the same or similar components to at least one of the components (e.g., modules) of the electronic device 101 illustrated in FIG. 1. The first electronic device 202 may include a processor 310 (e.g., the processor 120 of FIG. 1), a communication circuit 320 (e.g., the communication module 190 of FIG. 1), an input device 330 (e.g., the input module 150 of FIG. 1), a sensor 340 (e.g., the sensor module 176 of FIG. 1), an audio processing module 350 (e.g., the audio module 170 of FIG. 1), a power management module 360 (e.g., the power management module 188 of FIG. 1), a battery 370 (e.g., the battery 189 of FIG. 1), an interface 380 (e.g., the interface 177 of FIG. 1), and memory 390 (e.g., the memory 130 of FIG. 1).

According to an embodiment, the communication circuit 320 may include at least one of a wireless communication module (e.g., a Bluetooth communication module, a cellular communication module, a wireless-fidelity (Wi-Fi) communication module, a near-field communication (NFC) communication module, or a global navigation satellite system (GNSS) communication module) or a wired communication module (e.g., a local area network (LAN) communication module or a power line communication (PLC) communication module). As an example, the Bluetooth communication module may support at least one communication connection (e.g., communication link) by Bluetooth legacy communication and/or Bluetooth low energy (BLE) communication.

The communication circuit 320 may directly or indirectly communicate with at least one of the electronic device 101 (e.g., a smartphone), the external electronic device 250 (e.g., a charging device, such as a cradle), or the second electronic device 204 (e.g., the secondary earbud) through a first network (e.g., the first network 198 of FIG. 1), using at least one communication module. The second electronic device 204 may be configured in pair with the first electronic device 202. The communication module 320 may include one or more communication processors that are operable independently from the processor 310 and supports wired or wireless communication.

According to an embodiment, the communication circuit 320 may be connected with one or more antennas for transmitting signals or information to another electronic device (e.g., the electronic device 101, the second electronic device 204, or the external electronic device 250) (e.g., a cradle device) or receiving signals or information from the other electronic device. According to an embodiment, at least one antenna appropriate for a communication scheme used in a communication network, such as the first network (e.g., the first network 198 of FIG. 1) or the second network (e.g., the second network 199 of FIG. 2), may be selected from the plurality of antennas by, e.g., the communication circuit 320. The signal or information may then be transmitted or received between the communication circuit 320 and another electronic device via the selected at least one antenna.

According to an embodiment, the input device 330 may be configured to generate various input signals that may be used for operation of the first electronic device 202. The input device 330 may include at least one of a touch pad, a touch panel, or a button.

According to an embodiment, the input device 330 may generate a user input regarding the turn-on/off of the first electronic device 202. According to an embodiment, the input device 330 may receive a user input for a communication connection between the first electronic device 202 and the second electronic device 204. According to an embodiment, the input device 330 may receive a user input associated with audio data (or audio content). For example, the user input may be associated with functions of starting playback of audio data, pausing playback, stopping playback, adjusting playback speed, adjusting playback volume, or muting.

According to an embodiment, the sensor 340 may measure or identify the position or operational state of the first electronic device 202. The sensor 340 may convert measured or identified information into an electric signal. The sensor 340 may include at least one of, e.g., a magnetic sensor, an acceleration sensor, a gyro sensor, a geomagnetic sensor, a proximity sensor, a gesture sensor, a grip sensor, a biometric sensor, or an optical sensor.

According to an embodiment, the processor 310 may detect data (e.g., audio data) from the data packets (e.g., data protocol data units (PDUs)) received from the electronic device 101 and may process the detected data through the audio processing module 350 and output it to the speaker 354. The audio processing module 350 may support an audio data gathering function and reproduce the gathered audio data.

According to an embodiment, the audio processing module 350 may include an audio decoder (not shown) and a D/A converter (not shown). The audio decoder may convert audio data stored in the memory 390 or received from the electronic device 101 through the communication circuit 320 into a digital audio signal. The D/A converter may convert the digital audio signal converted by the audio decoder into an analog audio signal. According to an embodiment, the audio decoder may convert audio data received from the electronic device 101 through the communication circuit 320 and stored in the memory 390 into a digital audio signal. The speaker 354 may output the analog audio signal converted by the D/A converter.

According to an embodiment, the audio processing module 350 may include an A/D converter (not shown). The A/D converter may convert the analog audio signal transferred through the microphone 352 (hereinafter, referred to as a mic) into a digital voice signal. The mic 352 may include at least one air conduction microphone and/or at least one bone conduction microphone for detecting voice and/or sound.

According to an embodiment, the audio processing module 350 may play various audio data set in the operation of the first electronic device 202. For example, the processor 310 may be designed to detect insertion or removal of the first electronic device 202 into/from the user's ear through the sensor 340 and reproduce audio data regarding an effect sound or guide sound through the audio processing module 350. The output of the sound effect or guide sound may be omitted according to the user setting or the designer's intention.

According to an embodiment, the memory 390 may store various data used by at least one component (e.g., the processor 310 or a sensor 340) of the first electronic device 202. The various data may include, for example, software and input data or output data for a command related thereto. The memory 390 may include a volatile memory or a non-volatile memory.

According to an embodiment, the power management module 360 may manage power supplied to the first electronic device 202. According to an embodiment, the power management module 360 may be implemented as at least part of, for example, a power management integrated circuit (PMIC). According to an embodiment, the power management module 360 may include a battery charging module. According to an embodiment, if another electronic device (e.g., one of the electronic device 101, the second electronic device 204, or another electronic device) is electrically connected with the first electronic device 202 (wirelessly or wiredly), the power management module 360 may receive power from the other electronic device to charge the battery 370.

According to an embodiment, the battery 370 may supply power to at least one component of the first electronic device 202. The battery 370 may include, e.g., a rechargeable battery. According to an embodiment, if the first electronic device 202 is mounted in the cradle device (e.g., the third electronic device 250), the first electronic device 202 may charge the battery 370 to a designated charging level and then power on the first electronic device 202 or turn on at least a portion of the communication circuit 320.

According to an embodiment, the interface 380 may support one or more designated protocols that may be used for the first electronic device 202 to directly (e.g., wiredly) connect to the electronic device 101, the second electronic device 204, the cradle device (e.g., the external electronic device 250) or another electronic device. The interface 380 may include at least one of, e.g., a high definition multimedia interface (HDMI), a USB interface, an SD card interface, a power line communication (PLC) interface, or an audio interface. According to an embodiment, the interface 380 may include at least one connection port for establishing a physical connection with the cradle device (e.g., the external electronic device 250).

According to an embodiment, the processor 310 may execute software to control at least one other component (e.g., a hardware or software component) of the first electronic device 202 connected with the processor 310 and may process or compute various data. According to an embodiment, as at least part of the data processing or computation, the processor 310 may load a command or data received from another component (e.g., the sensor 340 or communication circuit 320) onto a volatile memory 390, process the command or the data stored in the volatile memory 390, and store resulting data in a non-volatile memory.

According to an embodiment, the processor 310 may establish a communication connection with the electronic device 101 through the communication circuit 320 and receive data (e.g., audio data) from the electronic device 101 through the established communication connection. According to an embodiment, the processor 310 may transmit the data, received from the electronic device 101 through the communication circuit 320, to the second electronic device 204. According to an embodiment, the processor 310 may perform the operations of the first electronic device 202 which are to be described below. According to an embodiment, the processor 310 may include a physical layer, a link layer, a host, and an application layer for performing Bluetooth communication.

According to embodiments of the disclosure, the first electronic device 202 may further include various modules depending on the form in which it is provided. There are many variations according to the convergence trend of digital devices, so it is not possible to list them all, but components equivalent to the above-mentioned components may be further included in the first electronic device 202. Further, it is apparent that in the first electronic device 202 according to various embodiments, specific components may be excluded from the above components or replaced with other components according to the form in which it is provided. This will be easily understood by those of ordinary skill in the art.

According to various embodiments, the second electronic device 204 configured in pair with the first electronic device 202 may include the same or similar components as those included in the first electronic device 202 and may perform all or some of the operations of the first electronic device 202 described below in connection with the drawings.

In an embodiment, the electronic device 101 may discover at least one of the electronic devices 202 and 204 through a BLE scan and establish a BLE connection with the discovered device. At least one of the electronic devices 202 and 204 may perform BLE advertising to be discovered by the electronic device 101 and establish a BLE connection with the electronic device 101.

An electronic device (e.g., the electronic device 101, the first electronic device 202, or the second electronic device 204) having a Bluetooth core version of 5.2 or higher may support an audio service through a connected isochronous stream (CIS) scheme and/or a broadcast isochronous stream (BIS).

BIS logical transmission (or logical transport) may be used to transmit one or more isochronous data streams to all devices for BIS within a designated range. The BIS may include one or more subevents for transmitting isochronous data packets (e.g., BIS data packets). The BIS may support transmission of several new isochronous data packets in all BIS events. The BIS does not include an acknowledgment protocol, and may be transmitted unidirectionally from a broadcasting device (e.g., a source electronic device) that broadcasts traffic. To enhance reliability of BIS logical transmission, isochronous data packets may be unconditionally retransmitted by increasing the number of subevents in all events. Transmission reliability may be enhanced by transmitting the isochronous data packets at an interval preceding an interval related to the isochronous data packets. This is referred to as pre-transmission. The BIS may be identified by a unique access address and timing information. The access address and timing information may be transmitted through a packet transmitted using a corresponding periodic advertising broadcast logic transmission.

A scanning device (e.g., a sink electronic device) supporting a synchronized receiver role (e.g., a sink role) may receive isochronous data (e.g., isochronous data packets) from the BIS after synchronizing with the BIS using the timing information obtained from periodic advertising packets.

Each BIS may be part of a broadcast isochronous group (BIG). The BIG may include two or more BISs having the same isochronous interval (e.g., ISO_Interval). BISs in the BIG have a common timing reference based on the source electronic device, and may be temporally synchronized with each other. The maximum number of BISs in the BIG may have a designated value (e.g., 31). BIG may also include control subevents.

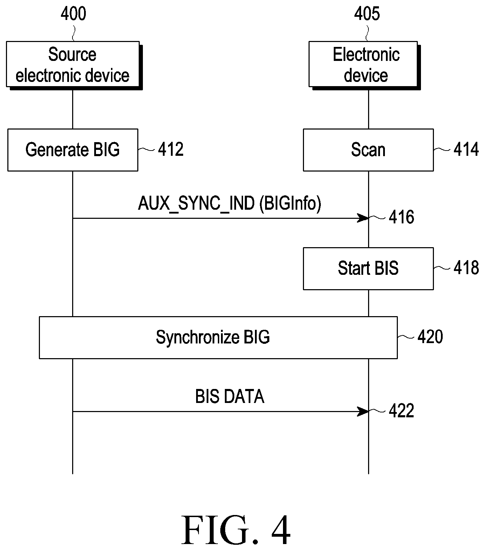

FIG. 4 is a signal flowchart (sequence diagram) illustrating a procedure for synchronizing with a broadcast isochronous group (BIG), according to an embodiment.

Referring to FIG. 4, in operation 412, the source electronic device 400 may create a BIG including one or more BISs and may start periodic advertising related to the BIG. In operation 414, for reception synchronization, the electronic device 405 (e.g., the electronic device 101, the first electronic device 202, or the second electronic device 204) may start BLE scanning.

In operation 416, the source electronic device 400 may periodically transmit an advertising packet (e.g., AUX_SYNC_IND) related to the BIG at a designated interval. For example, AUX_SYNC_IND may include BIS information in an additional controller advertising data (ACAD) field. The BIG information may include parameters used to synchronize with the BIS provided by the source electronic device 400. In an embodiment, the electronic device 405 may directly receive the BIG information from the source electronic device 400, may receive the BIG information from the source electronic device 400 based on assistance from an external electronic device (e.g., the electronic device 101), or may receive the BIG information from the external electronic device (e.g., the electronic device 101).

In an embodiment, the electronic device 405 (e.g., the electronic device 101) may receive the advertising packet through the BLE scanning and obtain BIG information (e.g., the BIG information 500) from the advertising packet. In an embodiment, the electronic device 405 (e.g., the electronic device 101) may receive synchronization information required to receive the BIG information 500 from the source electronic device 400, and may transmit the synchronization information to an external electronic device (e.g., the first electronic device 202 or the second electronic device 204). In an embodiment, the electronic device 405 (e.g., the first electronic device 202 or the second electronic device 204) may receive the advertising packet from the source electronic device 400 based on the synchronization information received from the external electronic device (e.g., the electronic device 101) and may obtain BIG information (e.g., the BIG information 500) from the advertising packet.

In operation 418, the electronic device 405 may determine to start receiving the BIS based on the BIG information. In operation 420, the electronic device 405 may synchronize with the BIG of the source electronic device 400 using parameters included in the BIG information. In an embodiment, the BIG synchronization operation performed by the electronic device 405 may include an operation of calculating an access address and timing information at which audio data is transmitted, based on the BIG information. In an embodiment, the timing information may include channel information (e.g., a channel map) and transmission time points of audio data.

In operation 422, the electronic device 405 may receive audio data (e.g., at least one BIS data packet) broadcast by the source electronic device 400 through at least one BIS in the BIG.

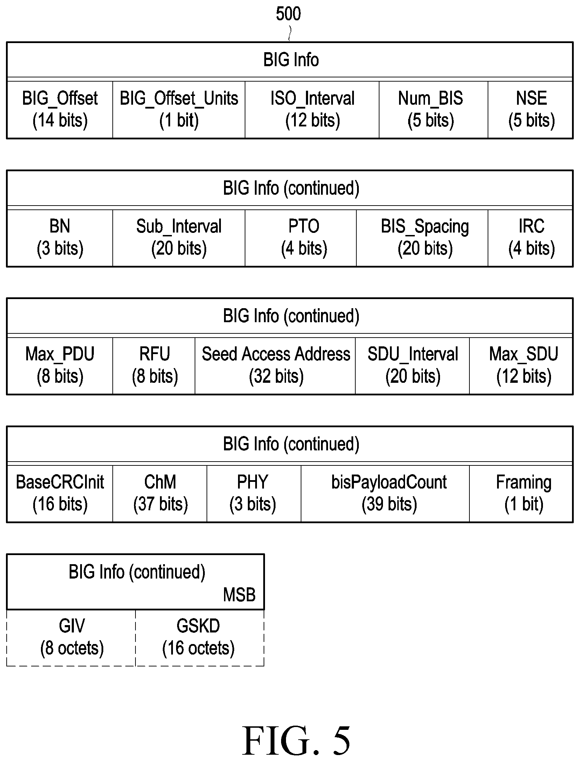

FIG. 5 is a view illustrating a format of BIG information according to an embodiment.

Referring to FIG. 5, the BIG information 500 may include at least one of BIG_Offset, BIG_Offset_units, ISO_Interval, Num_BIS, number of subevent (NSE), burst number (BN), Sub_Interval, pre-transmission offset (PTO), BIS_Spacing, immediate repetition count (IRC), Max_PDU, reserved for future use (RFU), SeedAccessAddress, SDU_Interval, Max_SDU, BaseCRCInit, channel map (ChM), physical (PHY), bisPayloadCount, Framing, group initialization vector (GIV), or group session key derivation (GSKD). In an embodiment, the length of the BIG information 500 may be 33 octets when not encrypted, and 57 octets when encrypted.

Parameters that may be included in the BIG information 500 will be described below.
Num_BIS indicates the number of BISs in the BIG. Each of the BISs in the BIG may be assigned a different BIS_Number from 1 to Num_BIS.
ISO_Interval may indicate a time of 1.25 ms between two adjacent BIG anchor points. (5ms to 4s)
BIS_Spacing may indicate the time between the start time of the subevents in adjacent BISs in the BIG and the start time of the first subevent of the last BIS.
Sub_Interval may indicate the time between start times of two consecutive subevents of each BIS.
Max_PDU is the maximum number of data octets capable of transmitting each BIS data packet within the BIG and may indicate the maximum duration of the packet. (1 to 251 octets)
Max_SDU may indicate the maximum size (e.g., maximum duration) of the service data unit (SDU) in the BIG. (1 to 4095 octets)
BN, PTO, and IRC may include values for controlling which data is transmitted in each BIG event. Subevents of each BIS event may be divided into groups including BN subevents. Thus, the group count (GC)) is NSE/BN. IRC may designate the number of groups carrying data related to the current BIS event. The remaining groups may carry data related to future BIS events designated by the PTO.

The NSE indicates the maximum number of subevents within each BIG event.

The framing field may indicate whether the BIG transmits framed data or unframed data.

BIG_Offset may indicate the time from the start time of the packet (e.g., AUX_SYNC_IND) including the BIG information 500 to the next BIG anchor point. The value of BIG_Offset may be indicated in units indicated by bits of BIG_Offset_Units. The time offset is determined by multiplying the value of BIG_Offset by the unit indicated by BIG_Offset_Units. The time offset may be greater than 600 µs (micro second). When the bit of BIG_Offset _Units is set, the unit is 300 µs, otherwise 30 µs. The bit of BIG_Offset_Units may not be set if the time offset is less than 491,460 µs. The BIG anchor point may be between the time offset and the time offset plus 1 unit after the start time of the packet (e.g., AUX_SYNC_IND) as follows.

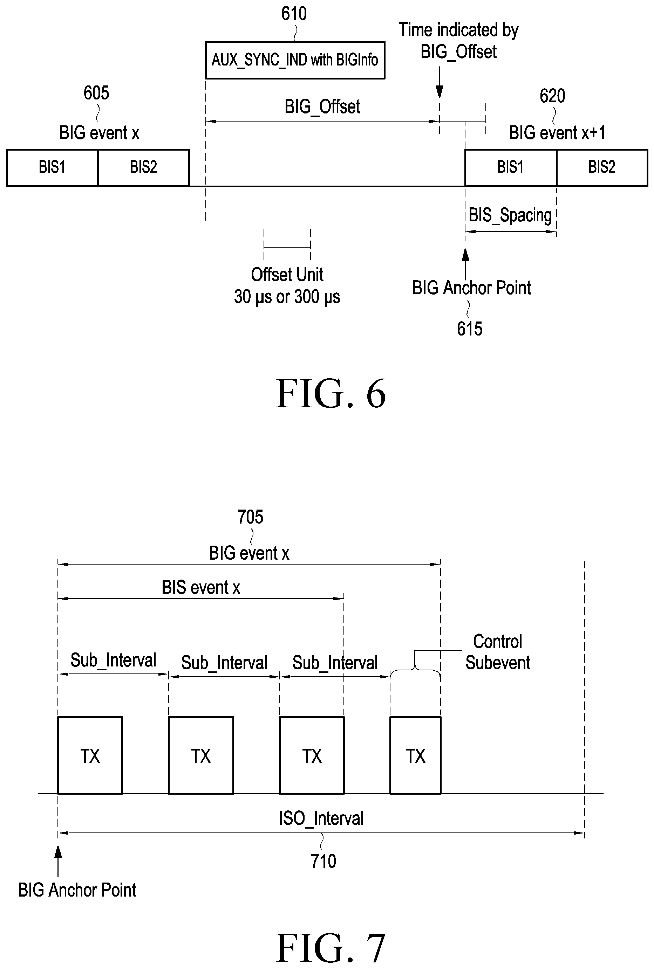

FIG. 6 is a view illustrating a BIG event for a periodic advertising event according to an embodiment.

Referring to FIG. 6, each BIS in the BIG provided by the source electronic device 400 may be configured as a schedule of a time slot known as an event and a subevent. The source electronic device 400 may transmit BIS data packets in subevents (e.g., a BIS1 subevent and a BIS2 subevent) within a BIG event (e.g., a BIG event x 605).

The source electronic device 400 may transmit an advertising packet 610 (e.g., AUX_SYNC_IND with BIGInfo) including BIG information (e.g., BIG information 500) at a designated time point. The electronic device 405 may determine the start time of the BIG anchor point 615 after the start time of the AUX_SYNC_IND based on the BIG_Offset and the BIG_Offset_Units included in the BIG information 500. A next BIG event (e.g., BIG event x+1 620) may start from the BIG anchor point 615, and each BIS subevent (e.g., BIS1 subevent or BIS2 subevent) may have a duration defined by BIS_Spacing.

SeedAccessAddress may indicate the seed access address for BIG.

SDU_Interval may indicate the time interval of the SDU.

BaseCRCInit may include the cyclic redundancy check (CRC) initial value for the BIS data packet.

ChM may include a channel map indicating a used data channel and an unused data channel.

PHY may indicate the physical channel transmission scheme (e.g., the symbol per second and/or the coding scheme) used by the BIG.

bisPayloadCount may include a count value for detecting the missing payload. bisPayloadCount may include a value for the first subevent of the BIG event based on BIG_Offset.

When the BIG is encrypted, the GIV and GSKD may include values for describing encryption.

The parameters included in the BIG information 500 may not be changed during the lifetime of the BIG.

FIG. 7 is a view illustrating a BIG and BIS events according to an embodiment.

Referring to FIG. 7, a BIG event (e.g., the BIG event x 705) may include one or more BIS data packets (e.g., protocol data units (PDUs)). The source electronic device 400 may transmit BIS data packets in BIG events (e.g., BIG event x 705). Each BIG event (e.g., BIG event x 705) may be divided into Num_BIS BIS events and, if present, one control subevent. Each BIS event may be divided into NSE subevents.

Each BIS event may start at the BIS anchor point and end after the last subevent. Each BIG event (e.g., the BIG event x 705) may start at the BIG anchor point and, if there is a control subevent, it may end thereafter, otherwise, end at the last constituent BIS event. The BIG anchor points may be regularly spaced apart by an interval of ISO_Interval 710. The BIS anchor points for BIS n of the BIG may be after (n - 1) × BIS_Spacing from the BIG anchor points, and may be regularly spaced apart by ISO_Interval 710. The subevents of each BIS may be spaced apart by Sub_Interval. The source electronic device 400 may terminate the current BIG event (e.g., the BIG event x 705), at least T_IFS (time for inter frame space) before the BIG anchor point of the next BIG event.

BISs in the BIG may be arranged sequentially or interleaved according to Sub_Interval and BIS_Spacing. In the case of sequential arrangement, BIS_Spacing may be greater than or equal to NSE X Sub_Interval, and all subevents of the BIS event may occur together. When interleaved, Sub_Interval may be Num_BIS X BIS_Spacing, the first subevents of all BISs may be adjacent, and the second subevents of all the following BISs may be adjacent.

The maximum length possible for the data portion (except for the control subevent) of the BIG event may be represented as BIG_Sync_Delay. The value of BIG_Sync_Delay may be the same as the time from the BIS anchor point to the BIG synchronization point, which is the end point of the packet including the payload of the Max_PDU octet transmitted in the last subevent. (BIG_Sync _Delay = (Num_BIS - 1) X BIS_Spacing + (NSE - 1) X Sub_Interval + MPT)

The BIS subevent is an opportunity for the source electronic device 400 to transmit BIS data packets and for the electronic device 405 (e.g., the electronic device 101 or the external electronic device 102) operating as a sink to receive the BIS data packets. The source electronic device 400 may transmit one BIS data packet at a time point at which each BIS subevent of the BIS event starts, and may transmit at least one BIS packet within six consecutive BIS events.

For each BIS event, the source electronic device 400 may provide a data burst including BN payloads. Each payload may include a single fragment or one or more SDU segments. One data burst is related to a designated BIS event, but may be transmitted in earlier events.

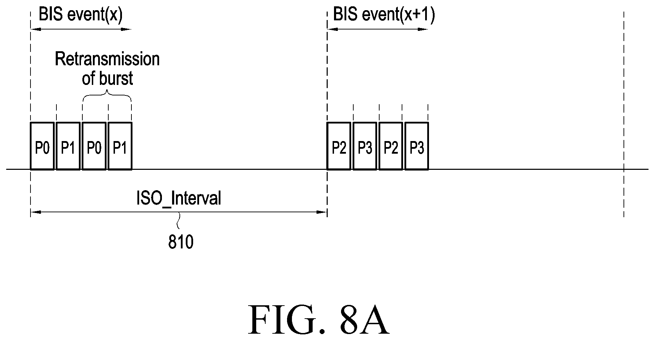

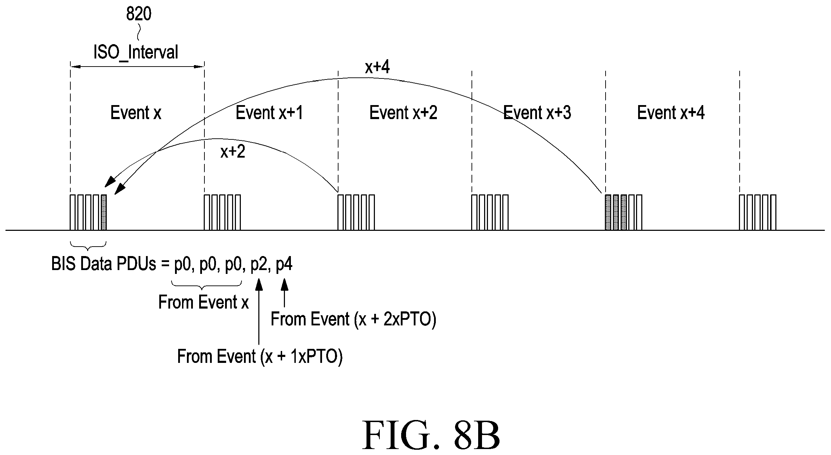

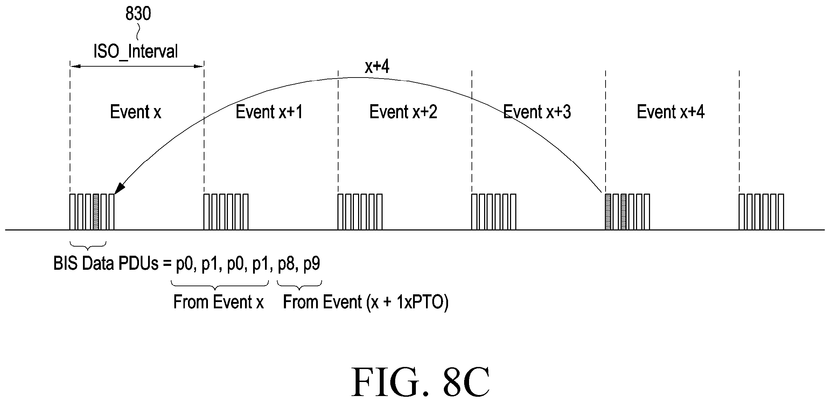

FIGS. 8A, 8B, and 8C are views illustrating retransmission of BIS data packets according to an embodiment.

Referring to FIG. 8A, payloads may be allocated to BIS sub-events in each BIS event in a BIS having BN=2, IRC=2, PTO=0, and NSE=4. One BIS event corresponding to ISO_Interval 810 may include up to NSE(=4) BIS sub-events. BIS data packets (e.g., P0, P1, or P2, P3) each including two payloads in each BIS event (e.g., BIS event x or BIS event x+1) may be allocated to two preceding BIS sub-events, and the remaining sub-events may be used for retransmission of the same BIS data packets (e.g., P0, P1, or P2, P3).

Referring to FIG. 8B, payloads may be allocated to BIS sub-events in each BIS event in a BIS having BN=1, IRC=3, PTO=2, and NSE=5. One BIS event corresponding to ISO_Interval 820 may include up to NSE(=5) BIS sub-events. Within the BIS event x, the BIS data packet p0 may be transmitted in three preceding BIS sub-events, the BIS data packet p2 for the BIS event x+2 may be transmitted in the fourth BIS sub-event, and the BIS data packet p4 for the BIS event x+4 may be transmitted in the last BIS sub-event. Accordingly, the BIS data packet p2 may be repeatedly transmitted in the BIS event x and the BIS event x+2, and the BIS data packet p4 may be repeatedly transmitted in the BIS event x and the BIS event x+4.

Referring to FIG. 8C, payloads may be allocated to BIS sub-events in each BIS event in a BIS having BN=2, IRC=2, PTO=4, and NSE=6. One BIS event corresponding to ISO_Interval 830 may include up to NSE(=6) BIS sub-events. Within the BIS event x, the BIS data packets p0 and p1 may be transmitted in four previous BIS sub-events, and in the last two BIS sub-events, the BIS data packets p8 and p9 for the BIS event x+4 may be transmitted. Accordingly, the BIS data packets p8 and p9 may be repeatedly transmitted in the BIS event x and the BIS event x+4.

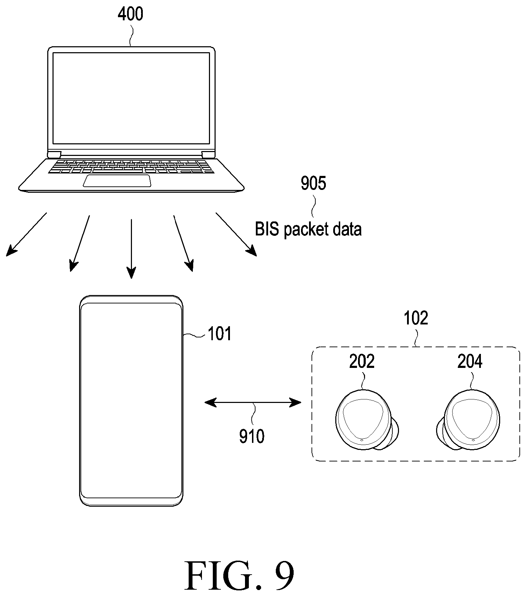

FIG. 9 is a view illustrating a system structure for transmitting audio data according to an embodiment of the disclosure.

Referring to FIG. 9, the source electronic device 400 may perform a broadcast audio service (e.g., a BIS audio service) according to the user's intention or a designated policy. The source electronic device 400 may create a BIG including two or more BISs for the broadcast audio service, periodically advertise connection information (e.g., BIG information 500) related to the created BIG, and transmit (e.g., broadcast) BIS packet data 905 (e.g., at least one of audio data, text data, vibration data, or visual data) through the BISs in the BIG based on the BIG information.

The external electronic device 102 configured to operate as a BIS sink may include, e.g., a first electronic device 202 or a second electronic device 204 constituting an ear wearable device (e.g., an earbud). In an embodiment, when the external electronic device 102 is an earbud, the external electronic device 102 may obtain the BIG information from the electronic device (e.g., the electronic device 101) or receive synchronization information necessary to obtain the BIG information. In an embodiment, the electronic device 101 may be a parent device (e.g., a smartphone) to which the external electronic device 102 is paired and/or bonded. In an embodiment, the external electronic device 102 may be a tablet or a smartphone, may receive the BIS information or the synchronization information from the parent device (e.g., the electronic device 101), and may be synchronized with the source electronic device 400 based on the received information.

In an embodiment, the electronic device 101 configured to play a BIS assistant role for the external electronic device 102 may perform a BLE scan and receive synchronization information necessary to receive BIG information through periodic advertising broadcast from the source electronic device 400. The electronic device 101 may transmit the synchronization information to the external electronic device 102 through the communication link 910. The external electronic device 102 may receive BIG information from the electronic device 400 based on the synchronization information.

The external electronic device 102 may calculate parameters such as an access address, channel information, and transmission times (opportunities) where the BIS packet data 905 is transmitted based on the BIG information, and may use the parameters to synchronize with the BIG of the source electronic device 400 and receive the BIS packet data 905 broadcast from the source electronic device 400 through the BISs in the BIG.

The electronic device 101 may operate as a BIS sink for the source electronic device 400 to receive other service data related to service data (e.g., the BIS packet data 905) received by the external electronic device 102 (e.g., earbuds). In an embodiment, the electronic device 101 may be synchronized with the BIG of the source electronic device 400 based on the BIG information and receive the BIS packet data 905 through at least one BIS in the BIG. In an embodiment, the electronic device 101 may be configured to receive the same BIS packet data 905 as that received by the external electronic device 102, or to receive a different type of data (not illustrated) (e.g., audio data, non-auditory data) corresponding to the BIS packet data 905. In an embodiment, the BIS packet data 905 may be received through a first BIS belonging to a first BIG, and the different type of data may be received through a second BIS belonging to the first BIG or a second BIG.

Embodiments of the disclosure may relate to a BIS among audio services available to an electronic device (e.g., the electronic device 101 or external electronic device 102) supporting wireless communication technology (e.g., at least one of Bluetooth legacy, Bluetooth classic, or Bluetooth low energy (BLE)).

Embodiments of the disclosure may classify data (e.g., the BIS audio PDUs) transmitted through BISs according to a designated criterion (e.g., at least one type among audio, text, vibration, or visualization) using the characteristics of BIS for which it is difficult to secure reliability due to broadcast-based operations including non-acknowledgment protocols. Embodiments of the disclosure provide various usability by applying a variable attribute including a variable bit rate and/or variable transmission power to PDU groups according to the classification result, and may enhance user convenience by providing auditory and non-auditory information to the user.

According to embodiments of the disclosure, a sink electronic device (e.g., the electronic device 101 or external electronic device 102) capable of performing wireless communication such as Bluetooth or Wi-Fi in a designated frequency band (e.g., 2.4 GHz) may provide the user with decoded data of a different type (e.g., another language or non-auditory type) than the audio data based on audio data transmitted through limited radio resources of the source electronic device (e.g., the source electronic device 400).

In an embodiment of the disclosure, the sink electronic device (e.g., the electronic device 101 or the external electronic device 102) may convert the audio data received from the source electronic device 400 through the BIS into data of a different type (e.g., a different language and/or a non-auditory type (e.g., text, vibration, and/or visual effect) designated by the user. In an embodiment of the disclosure, the sink electronic device (e.g., the electronic device 101 or external electronic device 102) may convert the audio data received through limited radio resources into non-auditory type data, such as text, vibration and/or visual effect, through a decoder based on a designated model, and provide the non-auditory data to the user. In an embodiment, the sink electronic device (e.g., the electronic device 101 and/or the external electronic device 102) may simultaneously (e.g., substantially simultaneously) output different types of audio data.

In an embodiment of the disclosure, the electronic device 101 capable of performing both a BIS sink role and a BIS assistant role may synchronize with the BIG (e.g., one or more BISs) of the source electronic device 400 and receive an audio service through at least one BIS of the BIG. In an embodiment, when the user listens to the audio service through the electronic device 101 or through the external electronic device 102 that has established a communication link with the electronic device 101, the electronic device 101 may convert the audio data of the audio service into a text type, a vibration type, and/or a visual type and output it through the display module 160 or the haptic module 179 of the electronic device 101. In an embodiment, the electronic device 101 may convert multinational channel data having the same content as the audio service being listening to by the user through the external electronic device 102 into data of at least one of the text type, the vibration type, and/or the visual type and output the data through the display module 160 or the haptic module 179 of the electronic device 101.

In embodiments of the disclosure, the electronic device 101 may convert an audio service into data of a different type (e.g., text, vibration, and/or visual effect) that meets the user's intention rather than the audio type, and output the converted data alone or simultaneously with the audio data of the audio service in synchronization with the audio service.

In embodiments of the disclosure, the electronic device 101 may convert the audio data received through the BIS into the text type, vibration type, and/or visual type data according to the user's purpose, rather than simply outputting it in audio form, and output the converted text data, vibration data, and/or visual data (e.g., an image and/or an icon) alone or in synchronization with the audio data. In embodiments of the disclosure, the electronic device 101 may operate as an assistant for the external electronic device 102, and may provide a desired service according to the user's tendency by outputting other data (e.g., another language, a subtitle, a vibration, a description, or visual data) matching the audio data of the audio service output from the external electronic device 102 in synchronization with the audio service.

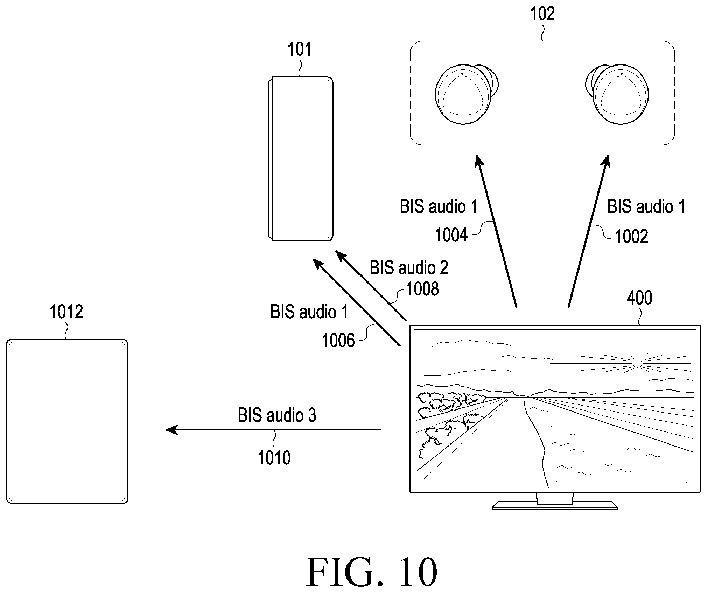

FIG. 10 is a view illustrating an example of a BIS service according to an embodiment.

Referring to FIG. 10, the electronic device 101 may receive advertising data (e.g., periodic advertising data) periodically transmitted by the source electronic device 400 operating as a BIS source according to the user's intention or a predetermined policy to synchronize with at least one BIG of the source electronic device 400. The electronic device 101 may establish a communication link for a BIS assistant role with the external electronic device 102, and may help the external electronic device 102 to synchronize with the source electronic device 400 by transferring synchronization information (e.g., synchronization information capable of receiving the BIG information 500 or the BIG information 500) received from the source electronic device 400 to the external electronic device 102.

The electronic device 101 may directly receive audio data (e.g., BIS audio 1 1006 or BIS audio 2 1008) transmitted through the BIS by the source electronic device 400, and output the audio data through a speaker (e.g., the audio output module 155), or may convert the audio data into text data, vibration data, and/or visual data, and output the text data, vibration data, and/or visual data through the haptic module 179 or the display module 160.

The electronic device 101 may output audio data (e.g., BIS audio 1 1006) identical to audio data (e.g., BIS audio 1 1002 and 1004) that the external electronic device 102 receives and outputs from the source electronic device 400, or a different type of data (not illustrated) corresponding to the audio data (e.g., BIS audio 1 1002 and 1004) (e.g., text data, vibration data, and/or visual data) at a time synchronized with the time of audio output from the source electronic device 400. The electronic device 101 may output audio data (e.g., BIS audio 2 1008) or text data (not illustrated) of a different language (e.g., a second language) corresponding to the language (e.g., a first language) of the audio data (e.g., BIS audio 1 1002 and 1004) that the external electronic device 102 receives from the source electronic device 400 and outputs, at a time synchronized with the time of audio output from the source electronic device 400.

The external electronic device 102 may establish a communication link with the electronic device 101, receive synchronization information (e.g., the BIG information 500 or the synchronization information capable of receiving BIG information 500 or BIG information 500) related to the source electronic device 400 from the electronic device 101, synchronize with at least one BIG of the source electronic device 400 based on the synchronization information, and receive BIS audio data (e.g., BIS audio 1 1002 and 1004) through at least one BIS of the BIG. In an embodiment, the external electronic device 102 may directly receive periodic advertising data (not illustrated) from the source electronic device 400, synchronize with at least one BIG of the source electronic device 400 based on the periodic advertising data, and receive BIS audio data (e.g., BIS audio 1 1002 and 1004) through at least one BIS of the BIG.

In order to provide a BIS audio service, the source electronic device 400 may perform periodic advertising that periodically transmits advertising data, and may transmit BIS audio data (e.g., at least one of BIS audio 1 1002, 1004, 1006, BIS audio 2 1008, or BIS audio 3 1010) through at least one BIS in at least one BIG. In an embodiment, the source electronic device 400 may transmit two or more BIS audio data (e.g., BIS audio 1 1002, 1004, 1006 and BIS audio 2 1008) composed of two or more languages related to the same content. In an embodiment, the source electronic device 400 may transmit data (e.g., BIS audio 3 1010) including a description or introduction related to the BIS audio data (e.g., BIS audio 1 1002, 1004, 1006 and BIS audio 2 1008) together with the BIS audio data (e.g., BIS audio 1 1002, 1004, 1006 and BIS audio 2 1008).

In an embodiment, the source electronic device 400 may transmit (e.g., broadcast) one or more synchronized BIS audio data (e.g., at least one of BIS audio 1 1002, 1004, 1006, BIS audio 2 1008, or BIS audio 3 1010) in one or more BIGs. BIS audio 1 1002, 1004, 1006, BIS audio 2 1008, and BIS audio 3 1010 may include data of a different type (e.g., audio, text, different language, description, or visual effect) including the same content. In an embodiment, BIS audio 1 1002 and 1004, respectively, may include audio data of a left channel and a right channel belonging to the same BIS. In an embodiment, BIS audio 1 1006 may include BIS audio 1 1002 and 1004. In an embodiment, BIS audio 2 1008 may include audio data of a different language including the same content as BIS audio 1 1002, 1004, and 1006. In an embodiment, the BIS audio 3 1010 may include text, description, or visual data related to BIS audio 1 1002, 1004, and 1006.

The electronic device 101 may receive BIS audio data (e.g., BIS audio 1 1006 or BIS audio 2 1008) of the BIS audio service discovered based on the discovery of the BIS audio service, and output the received BIS audio data, as it is, or may convert it into a different type of data (e.g., text, vibration, and/or visual effect), based on a preset setting or a user input (e.g., the user input 2015 or 2025). In an embodiment, the electronic device 101 may display text data (e.g., subtitle, dialogue, and/or description) corresponding to the same audio data output through the external electronic device 102. In an embodiment, while the external electronic device 102 or the electronic device 101 outputs BIS audio data received through the first BIS, the electronic device 101 may receive and output (e.g., display or vibrate) a different type of data (e.g., text, vibration and/or visual data) corresponding to the BIS audio data through the first BIS or the second BIS.

The electronic device 1012 (e.g., a tablet) may receive BIS audio data (e.g., BIS audio 3 1010) based on the user's input, and may convert the received BIS audio data, as it is, or convert it into a different type of data (e.g., different language, text, vibration, and/or visual effect) and output it. In an embodiment, while the external electronic device 102 outputs BIS audio 1 1002 and 1004, the electronic device 101 may output text (e.g., subtitle) of a different language (or the same language) corresponding to BIS audio 1 1002 and 1004. In an embodiment, while the external electronic device 102 outputs BIS audio 1 1002 and 1004, the electronic device 101 may output audio of a different language (or the same language) corresponding to BIS audio 1 1002 and 1004.

In an embodiment, when the electronic device 1012 is a wearable device (e.g., extended reality (XR) glasses), the electronic device 1012 may receive BIS audio 3 1010 identical to or corresponding to BIS audio 1 1002 and 1004 output from the external electronic device 102, and may output visual data corresponding to (e.g., synchronized with) BIS audio 1 1002 and 1004 based on BIS audio 3 1010. In an embodiment, the visual data may include subtitle or a virtual object that provides a visual effect corresponding to BIS audio 1 1002 and 1004. In an embodiment, while the external electronic device 102 outputs BIS audio 1 1002 and 1004, the electronic device 101 may output a subtitle corresponding to BIS audio 1 1002 and 1004, and the electronic device 1012 may output a virtual object corresponding to BIS audio 1 1002 and 1004.

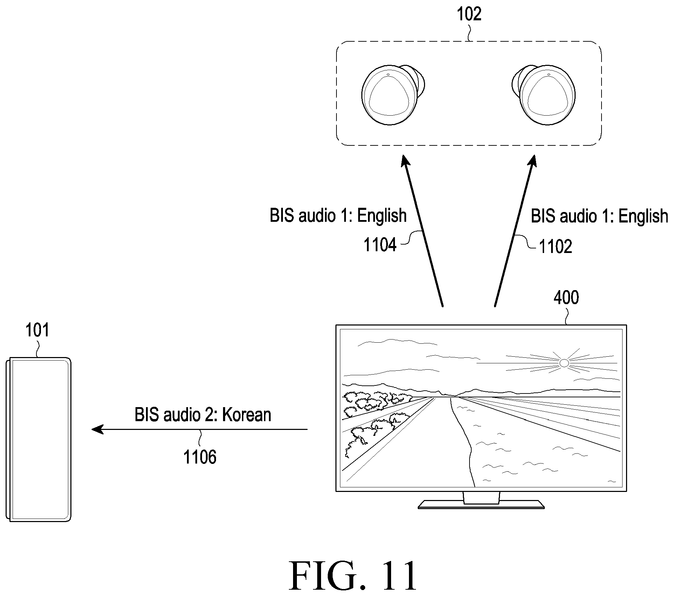

FIG. 11 is a view illustrating an operation of outputting audio of a different language synchronized with BIS audio, according to an embodiment.

Referring to FIG. 11, the source electronic device 400 may transmit (e.g., broadcast) BIS audio 1 1102 and 1104 of a first language (e.g., English) through the first BIS in the BIG. In an embodiment, the external electronic device 102 may be synchronized with the BIG of the source electronic device 400, receive BIS audio 1 1102 and 1104 through the first BIS, and output (e.g., playback) BIS audio 1 1102 and 1104 through a speaker (e.g., the speaker 354). In an embodiment, BIS audio 1 1102 and 1104 may include audio data 1102 of the left channel and audio data 1104 of the right channel.

The source electronic device 400 may transmit (e.g., broadcast) BIS audio 2 1106 of a second language (e.g., Korean) through the second BIS in the BIG (or another BIG). In an embodiment, BIS audio 2 1106 may be transmitted in synchronization with BIS audio 1 1102 and 1104. In an embodiment, the electronic device 101 may be synchronized with the BIG (or the other BIG) of the source electronic device 400, receive BIS audio 2 1106 through the second BIS, and convert BIS audio 2 1106 into text data (not illustrated) (e.g., subtitle data) by speech recognition technology. In an embodiment, BIS audio 2 1106 may include left audio data of the left channel and right audio data of the right channel, and the electronic device 101 may generate the text data based on at least one of left audio data or right audio data. In an embodiment, the electronic device 101 may output (e.g., display) the text data at a time synchronized with a time when the external electronic device 102 outputs BIS audio 1 1102 and 1104.

In an embodiment, the electronic device 101 may determine to receive BIS audio 2 1106 according to a user selection (e.g., the user input 2015) while BIS audio 1 1102 and 1104 is being serviced. In an embodiment, the electronic device 101 may determine to receive BIS audio 2 1106 including a language (e.g., Korean) corresponding to the language setting or previous use history of the electronic device 101 while BIS audio 1 1102 and 1104 is being serviced. In an embodiment, the electronic device 101 may be configured to output audio data of BIS audio 2 1106 or to output non-auditory data (e.g., subtitle or visual effect) generated based on BIS audio 2 1106.

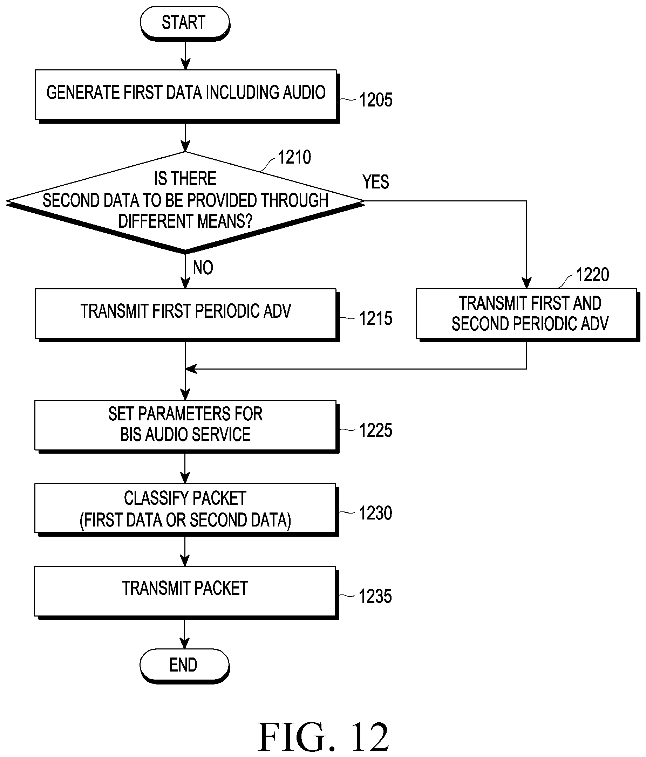

FIG. 12 is a view illustrating operations of a source electronic device according to an embodiment. According to embodiments, at least one of operations to be described below may be modified, omitted, or reordered.

Referring to FIG. 12, in operation 1205, the source electronic device 400 may generate first data (e.g., first audio data including a first language (e.g., English)) including audio for a BIS audio service through the first BIS. In operation 1210, the source electronic device 400 may determine whether there is a second data (e.g., second audio data including a second language (e.g., Korean) or text data including a subtitle or descriptions related to the first data) related to the BIS audio service and to be provided by a different means (e.g., the second BIS). In an embodiment, the first BIS and the second BIS may belong to a plurality of subgroups, respectively, in one BIG, or may belong to different BIGs, and may be synchronized with each other. When the second data is not present, the source electronic device 400 may proceed to operation 1215. When the second data is present, the source electronic device 400 may proceed to operation 1220.

In operation 1215, the source electronic device 400 may periodically transmit (e.g., broadcast) first periodic advertising data (e.g., "first periodic ADV") according to a designated first advertising interval. In an embodiment, the first periodic advertising data may include an AUX_SYNC_IND packet (e.g., an A_S_I packet 1608) that provides information (e.g., the BIG information 500) necessary for receiving the first data. In operation 1220, the source electronic device 400 may additionally transmit (e.g., broadcast) not only the first periodic advertising data but also the second periodic advertising data (e.g., "the second periodic ADV") at a designated second advertising interval. In an embodiment, the second periodic advertising data may include an AUX_SYNC_IND packet (e.g., an A_S_I packet 1608) that provides information (e.g., the BIG information 500) necessary for receiving the second data. In an embodiment, the first periodic advertising data and the second periodic advertising data may be transmitted through one or more packets (e.g., one or more AUX_SYNC_IND packets) using the same period or different periods.

In operation 1225, the source electronic device 400 may set parameters for the BIS audio service. In an embodiment, the parameters may include information indicating a bit rate and/or transmission power for the first data and/or the second data. In an embodiment, the parameters may include at least one parameter in the BIG information 500 for the first data and/or the second data.

In operation 1230, the source electronic device 400 may classify (e.g., categorize) packets (e.g., PDUs) to be transmitted according to at least one designated criterion. In an embodiment, the at least one criterion may be used to classify each of the packets to be transmitted into at least one of the audio type, the text type, and the vibration type. In an embodiment, the source electronic device 400 may classify the packets according to whether the packets to be transmitted include first data or second data.

In operation 1235, the source electronic device 400 may transmit (e.g., broadcast) the packets through at least one of the first BIS or the second BIS. In an embodiment, the packets including the first data may be transmitted through the first BIS by applying the parameters of the first BIS set in operation 1225. In an embodiment, the packets including the second data may be transmitted through the second BIS by applying the parameters of the second BIS set in operation 1225. In an embodiment, the packets including the second data may be transmitted in synchronization with the packets including the first data.

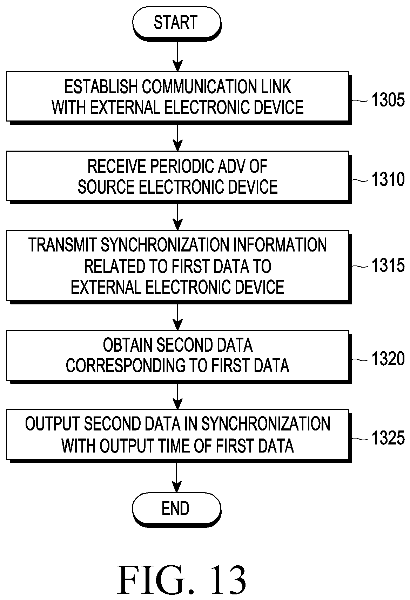

FIG. 13 is a view illustrating operations of an electronic device providing a non-auditory service synchronized with an audio service of an external electronic device according to an embodiment. According to embodiments, at least one of operations to be described below may be modified, omitted, or reordered. At least one of the operations to be described below in an embodiment may be executed by the processor 120 of the electronic device 101.

Referring to FIG. 13, in operation 1305, an electronic device 101 (e.g., the processor 120) operating as a BIS assistant for an external electronic device 102 and/or a BIS sink for a source electronic device 400 may establish a communication link (e.g., the communication link 910). In operation 1310, the electronic device 101 (e.g., the processor 120) may receive periodic advertising data (e.g., first periodic advertising data and/or second periodic advertising data) transmitted from the source electronic device 400, and obtain synchronization information related to first data (e.g., the first audio data of the BIS audio service) transmitted from the source electronic device 400 from the periodic advertising data.

In operation 1315, the electronic device 101 (e.g., the processor 120) may transfer the synchronization information related to the first data to the external electronic device 102. The external electronic device 102 may be synchronized with the BIG of the source electronic device 400 based on the synchronization information, and may receive first data (e.g., the first audio data) from the source electronic device 400. Although not illustrated, the electronic device 101 (e.g., the processor 120) may be synchronized with the BIG of the source electronic device 400 based on the synchronization information, and may receive the same first data as the external electronic device 102 receives. In an embodiment, the first data may be first audio data including a speech of a first language (e.g., English). In an embodiment, the first data may be broadcast from the source electronic device 400 through the first BIS.

In operation 1320, the electronic device 101 (e.g., the processor 120) may obtain second data corresponding to the first data. In an embodiment, the second data may include second audio data including a second language (e.g., Korean) different from the first data, text data including a subtitle, lyric,, and/or description related to the first data, or vibration data including a vibration pattern corresponding to the sound of the first data.

In an embodiment, the electronic device 101 (e.g., the processor 120) may receive the second data from the source electronic device 400. For example, the second data may include the second audio data of the second language translated from the first data (e.g., the first audio data of the first language).

In an embodiment, the electronic device 101 (e.g., the processor 120) may receive the first data from the source electronic device 400 and convert the first data into second data including a vibration pattern corresponding to the sound of the first data. In an embodiment, the electronic device 101 (e.g., the processor 120) may receive the first data from the source electronic device 400, and may convert the first data into second data including text corresponding to the speech of the first data by performing speech recognition decoding on the first data. In an embodiment, the electronic device 101 (e.g., the processor 120) may receive the first data from the source electronic device 400, and may convert the first data into second data (e.g., an image, an icon, or a virtual object) including a visual effect corresponding to the sound of the first data. In an embodiment, the electronic device 101 (e.g., the processor 120) may receive second audio data including a speech of a second language (e.g., Korean) different from the first data from the source electronic device 400 through the second BIS, and may convert the second audio data into second data including Korean text corresponding to the English speech of the first data by performing speech recognition decoding on the second audio data.

In an embodiment, the electronic device 101 (e.g., the processor 120) may determine whether to output the second data corresponding to the first data based on a user setting related to the first data and/or the second data. In an embodiment, the user setting may include information designating a different output means (e.g., a different language or non-auditory output means) for the first data and/or the second data.

In operation 1325, the electronic device 101 (e.g., the processor 120) may output (e.g., output through a speaker, vibrate, or display) the second data to be recognized by the user at a time synchronized with an output time (e.g., a time when the external electronic device 102 outputs the first data through the speaker 354) designated for the first data

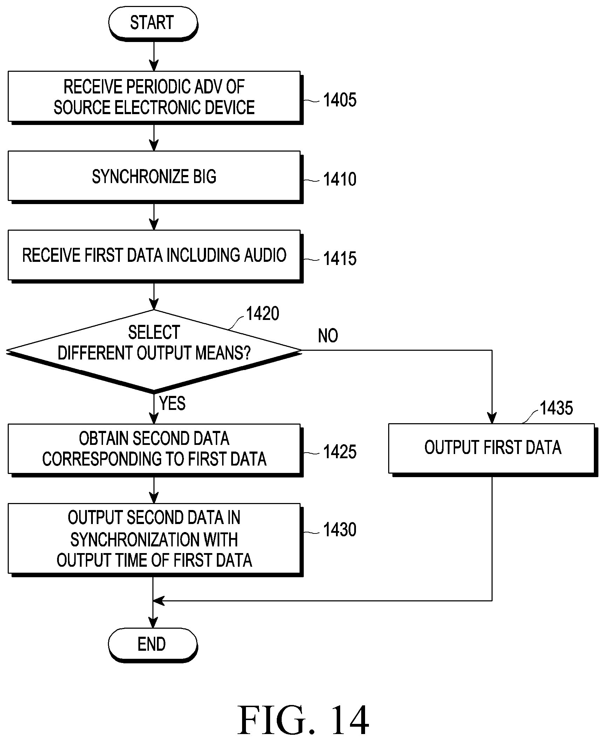

FIG. 14 is a view illustrating operations of an electronic device providing a non-auditory service synchronized with an audio service of an external electronic device according to an embodiment. According to embodiments, at least one of operations to be described below may be modified, omitted, or reordered. At least one of the operations to be described below in an embodiment may be executed by the processor 120 of the electronic device 101.

Referring to FIG. 14, in operation 1405, the electronic device 101 (e.g., the processor 120) operating as a BIS sink for the source electronic device 400 may receive periodic advertising data (e.g., first periodic advertising data and/or second periodic advertising data) transmitted from the source electronic device 400, and obtain synchronization information related to first data (e.g., the first audio data of the BIS audio service) transmitted from the source electronic device 400 from the periodic advertising data.

In operation 1410, the electronic device 101 (e.g., the processor 120) may be synchronized with the BIG of the source electronic device 400 using the synchronization information. Although not illustrated, in an embodiment, the electronic device 101 may operate as an assistant to the external electronic device 102 (e.g., earbuds), and the electronic device 101 (e.g., the processor 120) may help the external electronic device 102 receive BIG information about the source electronic device 400 by transferring the synchronization information to the external electronic device 102.

In operation 1415, the electronic device 101 (e.g., the processor 120) may receive the first data (e.g., the first audio data including the first language (e.g., English)) from the source electronic device 400. In an embodiment, the first data may be broadcast from the source electronic device 400 through the first BIS.

In operation 1420, the electronic device 101 (e.g., the processor 120) may determine whether another output means for the first data is configured by the user input. In an embodiment, the other output means may include an output means (e.g., text and/or vibration) of a designated language according to a user setting and/or a non-auditory type. In an embodiment, the other output means may be designated for a BIS audio service including the first data. When the other output means is configured, the external electronic device 102 (e.g., the processor 310) may proceed to operation 1425. On the other hand, when no other output means is configured, the external electronic device 102 (e.g., the processor 310) may proceed to operation 1435.

In operation 1425, the electronic device 101 (e.g., the processor 120) may obtain second data corresponding to the first data. In an embodiment, the second data may include second audio data including a second language (e.g., Korean) different from the first data, text data including a subtitle, lyric,, and/or description related to the first data, or vibration data including a vibration pattern corresponding to the sound of the first data.

In an embodiment, the electronic device 101 (e.g., the processor 120) may receive the second data from the source electronic device 400. For example, the second data may include the second audio data of the second language corresponding to the first data (e.g., the first audio data of the first language). For example, the second data may include the second audio data of the second language translated from the first data (e.g., the first audio data of the first language).

In an embodiment, the electronic device 101 (e.g., the processor 120) may convert the first data (e.g., the BIS audio 2102) into the second data (e.g., the vibration data 2122) including a vibration pattern corresponding to the sound of the first data. In an embodiment, the electronic device 101 (e.g., the processor 120) may convert the first data into second data (e.g., English text data 2222) including text corresponding to the speech of the first data by performing speech recognition decoding on the first data (e.g., the BIS audio 2202). In an embodiment, the electronic device 101 (e.g., the processor 120) may receive second audio data (e.g., BIS audio 2 2304) including a speech of a second language (e.g., Korean) different from the first data (e.g., BIS audio 1 2302) from the source electronic device 400 through the second BIS, and may convert the second audio data into second data (e.g., Korean text data 2322) including Korean text corresponding to the English speech of the first data by performing speech recognition decoding on the second audio data.

In operation 1430, the electronic device 101 (e.g., the processor 120) may output (e.g., output through a speaker, vibrate, or display) the second data at a time synchronized with an output time (e.g., a playback time designated for the first data) designated for the first data. In an embodiment, the playback time designated for the first data may be determined based on parameters related to the first data.

In operation 1435, the electronic device 101 (e.g., the processor 120) may output the first data (e.g., through a speaker).

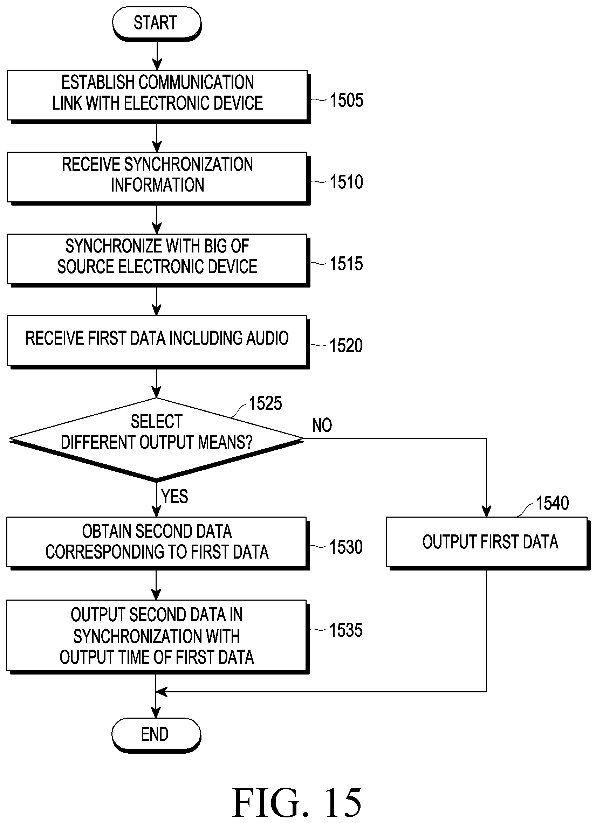

FIG. 15 is a view illustrating operations of an external electronic device receiving an audio service, according to an embodiment. According to embodiments, at least one of operations to be described below may be modified, omitted, or reordered. In an embodiment, at least one of the operations described below may be executed by a processor (e.g., the processor 310) of the external electronic device 102.

Referring to FIG. 15, in operation 1505, the external electronic device 102 (e.g., the processor 310) operating as a BIS sink for the source electronic device 400 may establish a communication link (e.g., the communication link 910) with the electronic device 101. In operation 1510, the external electronic device 102 (e.g., the processor 310) may obtain synchronization information about the source electronic device 400 from the electronic device 101 through the communication link.

In operation 1515, the external electronic device 102 (e.g., the processor 310) may be synchronized with the BIG of the source electronic device 400 using the synchronization information. In an embodiment, operation 1510 may be omitted, and the external electronic device 102 (e.g., the processor 310) may receive periodic advertising data (e.g., first periodic advertising data and/or second periodic advertising data) transmitted from the source electronic device 400, and may obtain the synchronization information from the periodic advertising data.

In operation 1520, the external electronic device 102 (e.g., the processor 310) may receive first data (e.g., the first audio data of the first language (e.g., English)) from the source electronic device 400. In an embodiment, the first data may be broadcast from the source electronic device 400 through the first BIS.

In operation 1525, the external electronic device 102 (e.g., the processor 310) may determine whether another output means for the first data is configured by the user input. In an embodiment, the other output means may include another type (e.g., text and/or vibration) and/or a designated language according to a user setting. In an embodiment, the other output means may be designated for a BIS audio service (e.g., a news channel) including the first data. In an embodiment, the external electronic device 102 (e.g., the processor 310) may receive information indicating that the other output means is configured from the electronic device 101. When the other output means is configured, the external electronic device 102 (e.g., the processor 310) may proceed to operation 1530. On the other hand, when no other output means is configured, the external electronic device 102 (e.g., the processor 310) may proceed to operation 1540.

In operation 1530, the external electronic device 102 (e.g., the processor 310) may obtain second data (e.g., the second audio data including a designated language (e.g., Korean), or text data including a subtitle and/or a description related to the first data) corresponding to the first data. In an embodiment, the external electronic device 102 (e.g., the processor 310) may receive the second data from the source electronic device 400 through the second BIS or from the electronic device 101. For example, the second data may include audio data of the second language translated from the first language of the first data. In operation 1535, the external electronic device 102 (e.g., the processor 310) may output the second data (e.g., output through the speaker 354) at a time (e.g., the playback time designated for the first data) synchronized with the output time of the first data. In an embodiment, the playback time designated for the first data may be determined based on parameters related to the first data.

In operation 1540, the external electronic device 102 (e.g., the processor 310) may output the first data (e.g., through the speaker 354).

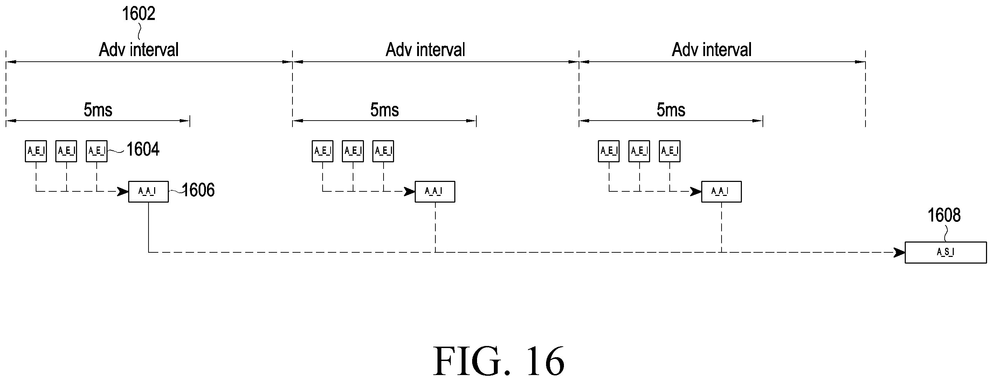

FIG. 16 is a view illustrating periodic advertising for a BIS audio service according to an embodiment.

Referring to FIG. 16, the source electronic device 400 may transmit (e.g., broadcast) periodic advertising data (e.g., at least one of ADV_EXT_IND (A_E_I) 1604, AUX_ADV_IND (A_A_I) 1606, or AUX_SYNC_IND (A_S_I) 1608) through a periodic advertising operation so that the BIS sync electronic devices (e.g., the electronic device 101 and/or the external electronic device 102) may receive the BIS audio data before performing the BIS audio service.

In an embodiment, the source electronic device 400 may transmit the ADV _EXT_IND (A_E_I) 1604 at each designated advertising interval 1602 a designated number of times (e.g., three times). The ADV_EXT_IND 1604 may include an auxiliary packet point indicating the position and channel information about the AUX_ADV_IND 1606. The AUX_ADV_IND 1606 may include at least one of an access address for the AUX_SYNC_IND 1608, a channel map, an advertising interval, a clock accuracy, or a time offset from the AUX_ADV_IND 1606, which may include BIG information (e.g., the BIG information 500). The AUX_SYNC_IND 1608 may start before the BIS audio data is transmitted, and may carry BIG information including parameters related to the BIS audio data and transmission information while the BIS audio data is transmitted.

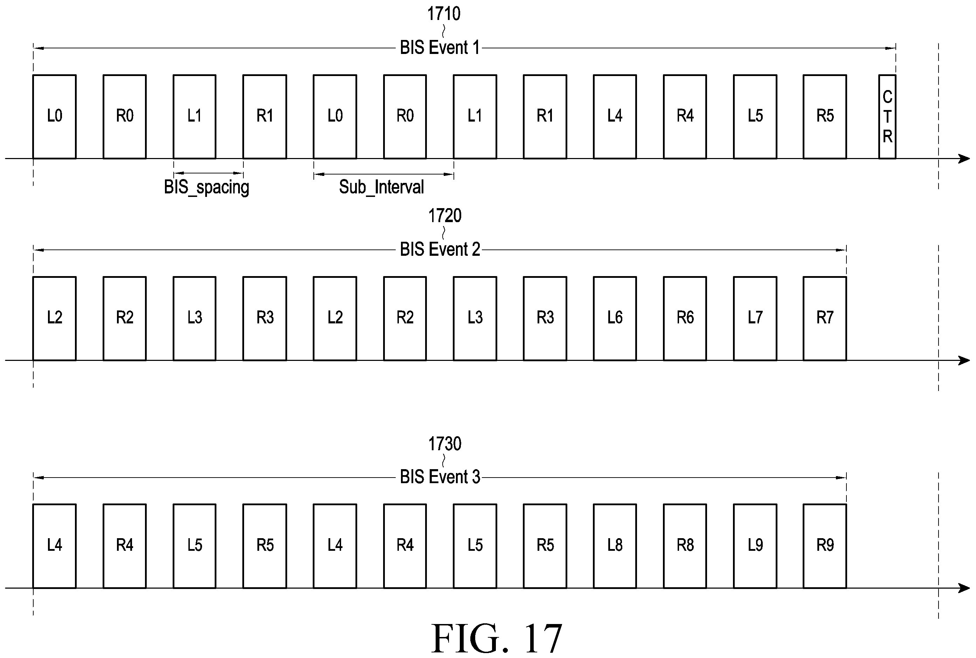

FIG. 17 is a view illustrating transmission of BIS audio data according to an embodiment.

Referring to FIG. 17, the source electronic device 400 may transmit BIS audio data (e.g., the BIS audio PDUs) based on parameters included in the BIG information (e.g., the BIG information 500) of AUX_SYNC_IND (e.g., AUX_SYNC_IND 1608). The parameters may include at least one of Num_BIS, NSE, BN, Sub_Interval, PTO, BIS_Spacing, IRC, Max_PDU, SDU_Interval, Max_SDU, ChM, PHY, or Framing. In the illustrated example, BIS audio data of Num_BIS=2, BN=2, IRC=2, PTO=2, NSE=6, and 96 kbs is illustrated.

The source electronic device 400 may transmit audio data (e.g., L0 and R0) of BIS audio 0 and audio data (e.g., L1 and R1) of BIS audio 1 using BIS event 1 1710. In the remaining time period of BIS event 1 1710, the audio data L4, R4, L5, and R5 of the BIS audios 4 and 5 and the control data CTR may be transmitted.

The source electronic device 400 may transmit audio data (e.g., L2 and R2) of BIS audio 2 and audio data (e.g., L3 and R3) of BIS audio 3 using BIS event 2 1720. The audio data L6, R6, L6, and R6 of the BIS audio 6 and 7 may be transmitted in the remaining time period of BIS event 2 1720.

The source electronic device 400 may transmit audio data (e.g., L4 and R4) of BIS audio 4 and audio data (e.g., L5 and R5) of BIS audio 5 using BIS event 3 1730. The audio data L8, R8, L9, and R9 of the BIS audio 8 and 9 may be transmitted in the remaining time period of BIS event 3 1730.

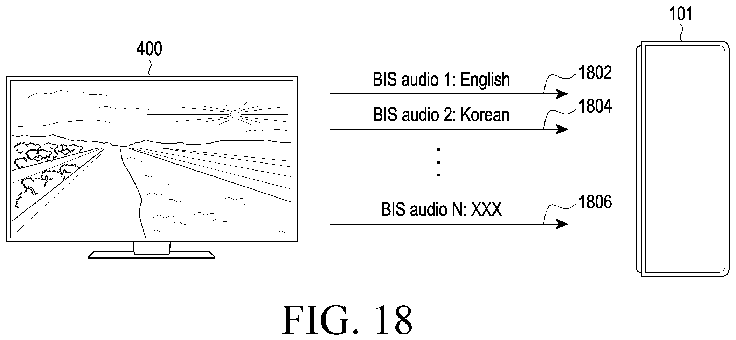

FIG. 18 is a view illustrating an operation of transmitting a plurality of BIS audio streams including the same content, according to an embodiment.

Referring to FIG. 18, the source electronic device 400 may transmit BIS audio 2 1804 and/or BIS audio N 1806 for the same purpose as BIS audio 1 1802 (e.g., English audio) to the electronic device 101. The audio data of BIS audio 2 1804 may include Korean audio, which is a translation of English audio of BIS audio 1 1802, or may include an introduction or description related to BIS audio 1 1802. For example, BIS audio 2 1804 may include a different language audio data of the same content as BIS audio 1 1802. For example, BIS audio 3 1806 may include text data such as a lyric, introduction, or description associated with audio data of BIS audio 1 1802, or vibration data synchronized with audio data of BIS audio 1 1802.

In an embodiment, the source electronic device 400 may determine a BIS audio service including audio data of a different language of the same content as BIS audio 1 1802 based on the language setting of sink devices positioned nearby (e.g., the electronic device 101 and/or external electronic device 102). For example, in a place such as an international airport, the source electronic device 400 may receive language setting information about nearby electronic devices (e.g., the electronic device 101 and/or external electronic device 102) from the electronic devices or a server (not illustrated) according to a designated communication scheme, and may determine to provide BIS audio services with one or more different languages according to the language setting information.

In an embodiment, the source electronic device 400 may transmit audio data indicating a dangerous circumstance (e.g., plane delay, terrorism, or natural disaster) through BIS audio 1 1802, and may transmit vibration data having a designated vibration pattern through BIS audio 2 1804 or the BIS audio N 1806.

In an embodiment, the source electronic device 400 may transmit audio data of one or more BIS audio services related to the same service purpose (e.g., the same content or the same announcement), and synchronize the BIS audio services by setting the same anchor point in BIG information about the BIS audio services as needed.

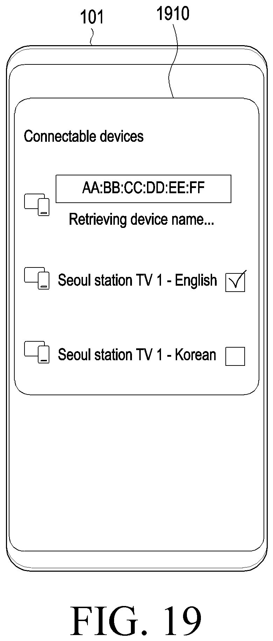

FIG. 19 is a view illustrating a user interface (UI) for selecting a plurality of audio services according to an embodiment.

Referring to FIG. 19, the electronic device 101 may discover one or more BIS audio services (e.g., BIS audio 1 and BIS audio 2) being serviced from at least one source electronic device (e.g., the source electronic device 400) through a Bluetooth scan and display a "connectable device" screen 1910 indicating the BIS audio services. The screen 1910 may include information (e.g., "Seoul station TV 1 - English") of BIS audio 1 and information (e.g., "Seoul station TV 1 - Korean") from BIS audio 2 associated therewith. In an embodiment, BIS audio 1 and BIS audio 2 may include different languages for the same information. The electronic device 101 may receive a user input for selecting at least one of BIS audio 1 and BIS audio 2 through the screen 1910. In an embodiment, the electronic device 101 may automatically select at least one of BIS audio 1 or BIS audio 2 based on the language setting or previous use history of the electronic device 101, or may request user confirmation for the automatically selected BIS audio.

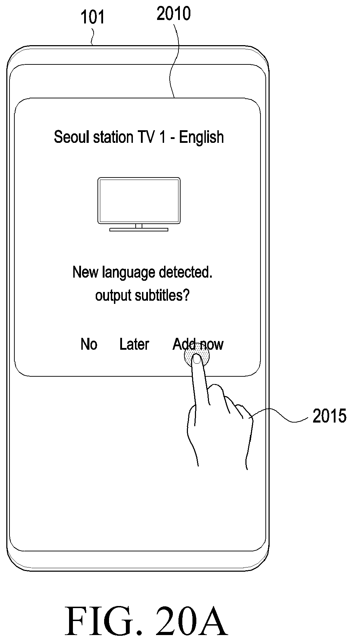

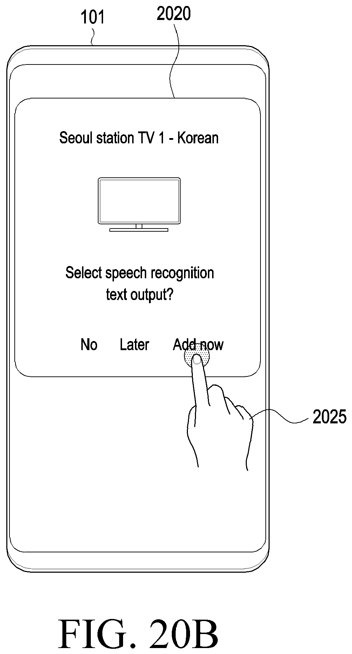

In an embodiment, when at least one BIS audio (e.g., BIS audio 1 and/or BIS audio 2) is selected through the screen 1910, the electronic device 101 may guide the user to configure a different output means (e.g., a different language and/or non-auditory type output means) corresponding to the selected BIS audio (e.g., each selected BIS audio), e.g., as illustrated in FIGS. 20A and/or 20B.

In an embodiment, the electronic device 101 may designate an output means corresponding to the selected BIS audio for the electronic device 101 or for the external electronic device 102. In an embodiment, the electronic device 101 may output the selected BIS audio through the electronic device 101 or through the external electronic device 102 using the different output means configured for the selected BIS audio.

FIGS. 20A and 20B are views illustrating a user interface for selecting an output means of a BIS audio service according to embodiments.

Referring to FIG. 20A, the electronic device 101 may display a pop-up window 2010 (e.g., a pop-up type window) including information inquiring about whether to receive BIS audio 2 when detecting BIS audio 2 (e.g., "Seoul station TV 1 - Korean") (e.g., when receiving periodic advertising data related to BIS audio 2) while receiving BIS audio 1 (e.g., "Seoul station TV 1 - English") directly or through the external electronic device 102. For example, the pop-up window 2010 may include "A new language has been detected. Would you like to display subtitles?"

Based on a user input (e.g., the user input 2015 for selecting "Add now") through the pop-up window 2010, the electronic device 101 may receive audio data of BIS audio 2, convert (e.g., decode) the audio data into text data through speech recognition, and display the text data in synchronization with playback of BIS audio 1.

In an embodiment, the electronic device 101 may discover BIS audio 2 while receiving BIS audio 1 and, when identifying that the periodic advertising data related to BIS audio 2 includes the same service name and/or BIG information as BIS audio 1, determine that BIS audio 2 is associated with BIS audio 1 and provides the same service (e.g., the same information and/or the same content) and display the pop-up window 2010.

In an embodiment, while providing a service through BIS audio 1, the electronic device 101 may provide (e.g., display) service information through BIS audio 2 associated with BIS audio 1 to the user.

Referring to FIG. 20B, the electronic device 101 may display a pop-up window 2020 including inquiring whether to output BIS audio 2 through a different output means (e.g., speech recognition text) based on a designated user input (not illustrated) or recognition of the speech included in BIS audio 2 while receiving BIS audio 2 (e.g., "Seoul station TV1 - Korean") or when discovering BIS audio 2 (e.g., "Seoul station TV1 - Korean") (e.g., when receiving the periodic advertising data related to BIS audio 2). For example, the pop-up window 2020 may include "Do you want to select speech recognition text output?"

Based on a user input (e.g., the user input 2025 for selecting "Add now") through the pop-up window 2020, the electronic device 101 may receive audio data of BIS audio 2, convert (e.g., decode) the audio data into text data through speech recognition, and display the text data in synchronization with playback of BIS audio 2.

Although not illustrated, in an embodiment, the pop-up window 2020 may include a menu item (e.g., a button for selecting "vibration type" or "visualization") that includes information inquiring whether to convert the audio data of BIS audio 2 into a vibration type or visualization data, and the electronic device 101 may store the user setting for converting the audio data of BIS audio 2 into a vibration type or visualization data based on a user input (e.g., a touch) to the menu item.

Although not illustrated, in an embodiment, the pop-up window 2020 may include a menu item (e.g., a button for selecting a "low volume") that includes information inquiring whether to output audio data of BIS audio 2 at a different volume (e.g., a predetermined low volume level), and the electronic device 101 may store a user setting for outputting the audio data of BIS audio 2 at a low volume based on a user input (e.g., a touch) to the menu item.

Although not illustrated, in an embodiment, the electronic device 101 may display a pop-up window 2020 including inquiring whether to output BIS audio 2 through a different output means (e.g., speech recognition text) based on a designated user input (not illustrated) or recognition of the speech included in BIS audio 2 while receiving BIS audio 2 (e.g., "Seoul station TV1 - Korean") or when discovering BIS audio 2 (e.g., "Seoul station TV1 - Korean") (e.g., when receiving the periodic advertising data related to BIS audio 2).

Based on a user input (e.g., the user input 2025 for selecting "Add now") through the pop-up window 2020, the electronic device 101 may receive audio data of BIS audio 2, convert (e.g., decode) the audio data into text data through speech recognition, and output (e.g., display) the text data in synchronization with playback of BIS audio 2.

Although not illustrated, in an embodiment, the pop-up window 2020 may include a menu item (e.g., a button for selecting a "low volume") that includes information inquiring whether to output audio data of BIS audio 2 at a different volume (e.g., a predetermined low volume level), and the electronic device 101 may store a user setting for outputting (e.g., displaying) the audio data of BIS audio 2 at a low volume based on a user input (e.g., a touch) to the menu item.

The electronic device 101 may output the audio data of BIS audio 2 as speech recognition text, vibration data, visual data, or low volume audio type based on the stored user setting.

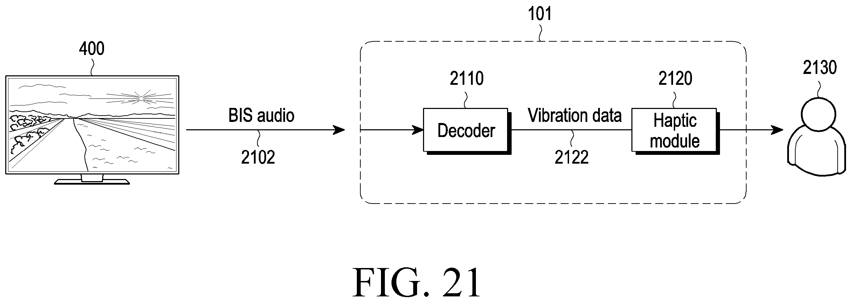

FIG. 21 is a view illustrating an operation of outputting vibration data corresponding to an audio service, according to an embodiment.

Referring to FIG. 21, the electronic device 101 may receive the BIS audio 2102 from the source electronic device 400 and output the same as the vibration type. In an embodiment, the electronic device 101 may activate (e.g., open) a reception circuit (e.g., the communication module 192) at one sub event in the ISO interval ISO_interval, and receive audio data (e.g., at least one audio data packet) of the BIS audio 2102 through the reception circuit.

The electronic device 101 may input the received audio data to the decoder 2110 (e.g., the processor 120). In an embodiment, the decoder 2110 may be included in the processor 120 or may be implemented as a software module executed by the processor 120. The decoder 2110 may convert the audio data into data (e.g., vibration data 2122) of a designated format. In an embodiment, the electronic device 101 may determine to convert the audio data of the BIS audio 2102 into the vibration data 2122 based on identifying that the BIS audio 2102 includes a news channel indicating an emergency. In an embodiment, the electronic device 101 may determine whether to convert the audio data into the vibration data 2122 based on periodic advertising data related to the BIS audio 2102 or audio data of the BIS audio 2102. In an embodiment, the electronic device 101 may determine whether to convert the audio data into the vibration data 2122 based on the user setting related to the BIS audio 2102.

The electronic device 101 may output the vibration data 2122 through the haptic module 2120 (e.g., the haptic module 179). The haptic module 2120 may convert the vibration data into a mechanical stimulus (e.g., vibration or movement) that the user 2130 may perceive through tactile or motor sensation.

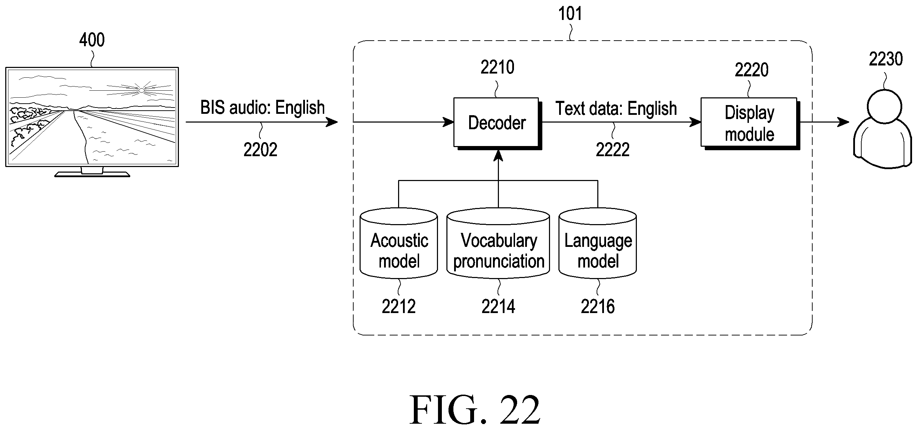

FIG. 22 is a view illustrating an operation of outputting text data corresponding to an audio service, according to an embodiment.

Referring to FIG. 22, the electronic device 101 may receive BIS audio 2202 from the source electronic device 400 and output the same as the text type. In an embodiment, the electronic device 101 may activate (e.g., open) a reception circuit (e.g., the communication module 192) at one sub event in the ISO interval ISO_interval, and receive audio data (e.g., at least one audio data packet) of the BIS audio 2202 through the reception circuit.

The electronic device 101 may input the received audio data to the decoder 2210 (e.g., the processor 120). In an embodiment, the decoder 2210 may be included in the processor 120 or may be implemented as a software module executed by the processor 120. The decoder 2210 may convert the audio data into text-type data (e.g., text data 2222) by performing a speech recognition or speech to text function based on at least one designated DB (e.g., at least one of an acoustic model DB 2212, a vocabulary pronunciation DB 2214, or a language model DB 2216).

In an embodiment, the electronic device 101 may determine to convert the audio data of the BIS audio 2202 into the text data 2222 (e.g., English text) based on identifying that the BIS audio 2202 includes an English speech. In an embodiment, the electronic device 101 may determine whether to convert the audio data into the text data 2222 based on periodic advertising data related to the BIS audio 2202 or audio data of the BIS audio 2202. In an embodiment, the electronic device 101 may determine whether to convert the audio data into the text data 2222 based on the user setting related to the BIS audio 2202.

The electronic device 101 may output (e.g., display) the text data 2222 so that the user 2230 may read it through the display module 2220 (e.g., the display module 160). In an embodiment, the electronic device 101 may output the audio data of the BIS audio 2202 through a speaker (e.g., the audio output module 155) while simultaneously displaying the text data 2222 at a time synchronized with the output time of the audio data.

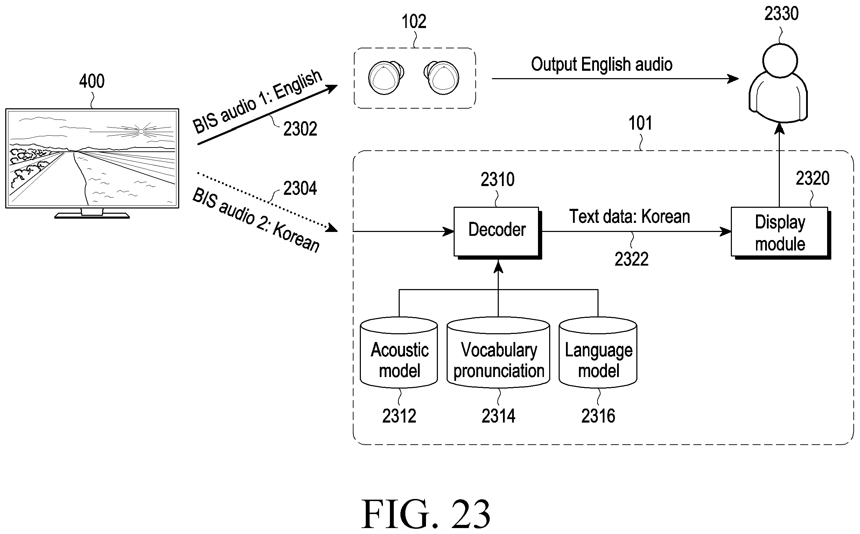

FIG. 23 is a view illustrating an operation of outputting text data corresponding to at least one of a plurality of audio services according to an embodiment.

Referring to FIG. 23, the electronic device 101 may receive audio data of BIS audio 2 2304 from the source electronic device 400. In an embodiment, the electronic device 101 may provide synchronization information for BIS audio 1 2302 to the external electronic device 102 to help the external electronic device 102 receive audio data of BIS audio 1 2302 from the source electronic device 400. In an embodiment, the electronic device 101 may receive audio data of BIS audio 1 2302 as well as BIS audio 2 2304 from the source electronic device 400. The electronic device 101 may output the audio data of BIS audio 2 2304 as the text type based on a predetermined setting or a user setting.

The electronic device 101 may receive the audio data of BIS audio 1 2302 and BIS audio 2 2304 transmitted by the source electronic device 400, and may selectively input at least some audio data among the received audio data to the decoder 2310 performing a speech recognition function. In an embodiment, the electronic device 101 may input audio data of one or more BIS audios including BIS audio 2 2304 to the decoder 2310.

The decoder 2310 may convert the audio data into text-type data (e.g., text data 2322) by performing a speech recognition function based on at least one designated DB (e.g., at least one of an acoustic model DB 2312, a vocabulary pronunciation DB 2314, or a language model DB 2316).

In an embodiment, the audio data of BIS audio 1 2302 may include an English speech, and the external electronic device 102 may receive the audio data of BIS audio 1 2302 with the assistance of the electronic device 101 or alone to output the audio data so that the user 2330 may hear it.

In an embodiment, based on identifying that BIS audio 1 2302 includes an English speech, the electronic device 101 may receive BIS audio 2 2304 including a Korean speech and determine to convert the audio data of BIS audio 2 2304 into the text data 2322 (e.g., Korean text). In an embodiment, the electronic device 101 may determine whether to convert the audio data into the text data 2322 based on periodic advertising data related to BIS audio 2 2304 or audio data of BIS audio 2 2304. In an embodiment, the electronic device 101 may determine whether to convert the audio data into the text data 2322 based on a user setting related to BIS audio 1 2302 and/or BIS audio 2 2304. In an embodiment, when BIS audio 1 2302 is being output through the external electronic device 102, the electronic device 101 may determine whether to convert the audio data into the text data 2322 based on the user setting designating to output a Korean subtitle based on BIS audio 2 2304 including the Korean speech corresponding to BIS audio 1 2302.

The electronic device 101 may output (e.g., display) the text data 2322 so that the user 2330 may read it through the display module 2320 (e.g., the display module 160). In an embodiment, the electronic device 101 may output the audio data of BIS audio 1 2302 through a speaker (e.g., the speaker 354) of the external electronic device 102 while simultaneously displaying the text data 2322 at a time synchronized with the output time of the audio data. The electronic device 101 may receive one or more BIS audio services including BIS audio 2 2304, convert the audio data into text data by inputting audio data from at least one of the BIS audio services to a designated decoder (e.g., the decoder 2310), and provide the text data to the user 2330 through the display module 2320. The user 2330 may read one or more text data (at least one of the subtitle, lyric, or description) corresponding to the audio through the electronic device 101 while listening to audio through the external electronic device 102 worn on the ear.

In an embodiment, the electronic device 101 may change the output method of BIS audio 1 2302 and the output method of BIS audio 2 2304 according to a user input or a designated condition. For example, the electronic device 101 may change the output method of BIS audio 1 2302 from the speaker 354 of the external electronic device 102 to a different output means (e.g., the sound output module 155 or display module 160 of the electronic device 101) and change the output method of BIS audio 2 2304 from the display module 160 to a different output means (e.g., the speaker 352 of the external electronic device 102 or the sound output module 155 of the electronic device 101).

In an embodiment, the electronic device 101 may output text data 2322 corresponding to BIS audio 2 2304 using at least a portion of the display screen through the display module 2320. For example, the electronic device 101 may be implemented as a foldable device, and may split the display screen based on folding of the display screen, and display the text data 2322 through at least a portion of the split screen.

An electronic device 101 according to an embodiment may comprise memory 130 storing instructions, a communication module 190, a processor 120 functionally connected to the memory and the communication module. The instructions may, when executed by the processor, cause the electronic device to establish a communication link with an external electronic device 102 through the communication module. The instructions may, when executed by the processor, cause the electronic device to receive advertising data from a source electronic device 400 through the communication module. The instructions may, when executed by the processor, cause the electronic device to transmit synchronization information related to first data obtained from the advertising data to the external electronic device through the communication link. The instructions may, when executed by the processor, cause the electronic device to obtain second data corresponding to the first data. The instructions may, when executed by the processor, cause the electronic device to output the second data at a time synchronized with a time when the external electronic device outputs the first data.

In an embodiment, the instructions may, when executed by the processor, cause the electronic device to convert the first data into the second data including a different type of data corresponding to the first data.

In an embodiment, the second data may include at least one of text corresponding to a voice of the first data obtained through speech recognition decoding of the first data, a vibration pattern corresponding to a sound of the first data, or visual data corresponding to the first data.

In an embodiment, the instructions may, when executed by the processor, cause the electronic device to receive the second data through a second BIS different from a first BIS including the first data.

In an embodiment, the instructions may, when executed by the processor, cause the electronic device to receive, from the source electronic device, audio data of a second language different from a first language of the first data, and convert the audio data into the second data including text corresponding to a voice of the first data through speech recognition decoding. The second language may be selected according to a set language of the electronic device.

In an embodiment, the instructions may, when executed by the processor, cause the electronic device to display information inquiring whether to output the second data based on receiving advertising data related to the audio data having the same service name and/or the same BIG information as a service name and/or BIG information of the first data.

In an embodiment, the instructions may, when executed by the processor, cause the electronic device to display information inquiring whether to output speech recognition text of the audio data based on receiving advertising data related to the audio data.

In an embodiment, the instructions may, when executed by the processor, cause the electronic device to determine whether to output the second data based on a user setting related to the first data.

In an embodiment, the instructions may, when executed by the processor, cause the electronic device to determine to output the second data through a non-auditory type output means based on the user setting.

In an embodiment, the second data may be output at the same time in different languages. A case where the second data is output at the same time in different languages may be applied to a simultaneous interpretation scenario.

In an embodiment, the second data may be output at the same time through different non-auditory output means.

In an embodiment, the second data may be output at the same time through different auditory-type output means.

In an embodiment, the second data may be output at the same time through an auditory output means and a non-auditory output means.

In an embodiment, the instructions may, when executed by the processor, cause the electronic device to display a screen 1910 indicating one or more BIS audio services associated with the first data, and receive a user input for selecting at least one BIS audio service through the screen.

A method for operating an electronic device 101 according to an embodiment of the disclosure may comprise establishing 1305 a communication link with an external electronic device 102. The method may comprise receiving 1310 advertising data from a source electronic device 400. The method may comprise transmitting 1315 synchronization information related to first data obtained from the advertising data to the external electronic device through the communication link. The method may comprise obtaining 1320 second data corresponding to the first data. The method may comprise outputting 1325 the second data at a time synchronized with a time when the external electronic device outputs the first data.

In an embodiment, the obtaining may include converting the first data into the second data including a different type of data corresponding to the first data.

In an embodiment, the second data may include at least one of text corresponding to a voice of the first data obtained through speech recognition decoding of the first data, a vibration pattern corresponding to a sound of the first data, or visual data corresponding to the first data.

In an embodiment, the obtaining may include at least one of receiving the second data through a second BIS different from a first BIS including the first data.

In an embodiment, the obtaining may include receiving, from the source electronic device, audio data of a second language different from a first language of the first data, and converting the audio data into the second data including text corresponding to a voice of the first data through speech recognition decoding. The second language may be selected according to a set language of the electronic device.

In an embodiment, the method may comprise displaying information 2010 inquiring whether to output the second data based on receiving advertising data related to the audio data having the same service name and/or the same broadcast isochronous group BIG information as a service name and/or BIG information of the first data.

In an embodiment, the method may comprise displaying information 2010 inquiring whether to output the second data based on receiving advertising data related to the audio data having the same service name and/or the same broadcast isochronous group BIG information as a service name and/or BIG information of the first data.

In an embodiment, the method may further comprise determining whether to output the second data based on a user setting related to the first data.

In an embodiment, the method may further comprise determining to output the second data through a non-auditory type output means based on the user setting.

In an embodiment, the second data may be output at the same time in different languages. A case where the second data is output at the same time in different languages may be applied to a simultaneous interpretation scenario.

In an embodiment, the second data may be output at the same time through different non-auditory output means.

In an embodiment, the second data may be output at the same time through different auditory-type output means.

In an embodiment, the second data may be output at the same time through an auditory output means and a non-auditory output means.

In an embodiment, the method may comprise displaying a screen indicating one or more BIS audio services associated with the first data, and receiving a user input for selecting at least one BIS audio service through the screen.

According to an embodiment, in a non-transitory computer-readable storage medium storing one or more programs, the one or more programs may include instructions to, when executed by at least one processor of an electronic device, enable the electronic device to establish a communication link with an external electronic device, receive advertising data from a source electronic device, transmit synchronization information related to first data obtained from the advertising data to the external electronic device through the communication link, obtain second data corresponding to the first data, and output the second data at a time synchronized with a time when the external electronic device outputs the first data.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., the memory 390, internal memory 136 or external memory 138) that is readable by a machine (e.g., the electronic device 202 or 204 or the electronic device 101). For example, a processor (e.g., the processor 310 or processor 120) of the machine (e.g., the electronic device 202 or 204 or electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
memory (130) storing instructions;
a communication module (190);
a processor (120) functionally connected to the memory and the communication module, wherein the instructions, when executed by the processor, cause the electronic device to:
establish a communication link with an external electronic device (102) through the communication module;
receive advertising data from a source electronic device (400) through the communication module;
transmit synchronization information related to first data obtained from the advertising data to the external electronic device through the communication link;
obtain second data corresponding to the first data; and
output the second data at a time synchronized with a time when the external electronic device outputs the first data.

2. The electronic device of claim 1, wherein the instructions, when executed by the processor, cause the electronic device to convert the first data into the second data including a different type of data corresponding to the first data.

3. The electronic device of claim 2, wherein the second data includes at least one of text corresponding to a voice of the first data obtained through speech recognition decoding of the first data, a vibration pattern corresponding to a sound of the first data, or visual data corresponding to the first data.

4. The electronic device of any one of claims 1 to 3, wherein the instructions, when executed by the processor, cause the electronic device to receive the second data through a second broadcast isochronous stream (BIS) different from a first BIS including the first data.

5. The electronic device of claim 1 or 4, wherein the instructions, when executed by the processor, cause the electronic device to:
receive, from the source electronic device, audio data of a second language different from a first language of the first data; and
convert the audio data into the second data including text corresponding to a voice of the first data through speech recognition decoding, and
wherein the second language is selected according to a set language of the electronic device.

6. The electronic device of claim 5, further comprising a display module (160),
wherein the instructions, when executed by the processor, cause the electronic device to display, through the display module, information inquiring whether to output the second data based on receiving advertising data related to the audio data having the same service name and/or the same broadcast isochronous group (BIG) information as a service name and/or BIG information of the first data.

7. The electronic device of claim 5, further comprising a display module (160),
wherein the instructions, when executed by the processor, cause the electronic device to display, through the display module, information inquiring whether to output speech recognition text of the audio data based on receiving advertising data related to the audio data.

8. The electronic device of any one of claims 1 to 7, wherein the instructions, when executed by the processor, cause the electronic device to determine whether to output the second data based on a user setting related to the first data.

9. The electronic device of claim 8, wherein the instructions, when executed by the processor, cause the electronic device to determine to output the second data through a non-auditory type output means based on the user setting.

10. The electronic device of any one of claims 1 to 9, wherein the instructions, when executed by the processor, cause the electronic device to:
display a screen (1910) indicating one or more BIS audio services associated with the first data; and
receive a user input for selecting at least one BIS audio service through the screen.

11. A method for operating an electronic device (101), the method comprising:
establishing (1305) a communication link with an external electronic device (102);
receiving (1310) advertising data from a source electronic device (400);
transmitting (1315) synchronization information related to first data obtained from the advertising data to the external electronic device through the communication link;
obtaining (1320) second data corresponding to the first data; and
outputting (1325) the second data at a time synchronized with a time when the external electronic device outputs the first data.

12. The method of claim 11, wherein the obtaining includes converting the first data into the second data including a different type of data corresponding to the first data, and
wherein the second data includes at least one of text corresponding to a voice of the first data obtained through speech recognition decoding of the first data, a vibration pattern corresponding to a sound of the first data, or visual data corresponding to the first data.

13. The method of claim 11 or 12, wherein the obtaining includes at least one of:
receiving the second data through a second broadcast isochronous stream (BIS) different from a first BIS including the first data;
receiving, from the source electronic device, audio data of a second language different from a first language of the first data; or
converting the audio data into the second data including text corresponding to a voice of the first data through speech recognition decoding, and
wherein the second language is selected according to a set language of the electronic device.

14. The method of claim 13, comprising at least one of:
displaying information inquiring whether to output the second data based on receiving advertising data related to the audio data having the same service name and/or the same broadcast isochronous group (BIG) information as a service name and/or BIG information of the first data; or
displaying information inquiring whether to output speech recognition text of the audio data based on receiving advertising data related to the audio data.

15. The method of any one of claims 11 to 14, comprising at least one of:
determining whether to output the second data based on a user setting related to the first data;
determining to output the second data through a non-auditory type output means based on the user setting;
displaying a screen indicating one or more BIS audio services associated with the first data; or
receiving a user input for selecting at least one BIS audio service through the screen.
